# EUROPEAN PATENT SPECIFICATION

(11) **EP 2 958 455 B1**
(45) Date of publication and mention of the grant of the patent: **25.03.2020**
(21) Application number: 14754286.4
(22) Date of filing: 21.02.2014
(51) Int. Cl.: A45C 11/00

(54) **PROTECTIVE CASE WITH SWITCH COVER**
SCHUTZHÜLLE MIT SCHALTERABDECKUNG
ÉTUI DE PROTECTION AYANT UN COUVRE-INTERRUPTEUR

(30) Priority: 25.02.2013 US 201361768538 P
(43) Date of publication of application: 30.12.2015
(73) Proprietor: Mophie, Inc., Tustin, CA 92780 (US)
(72) Inventor: TO, Nguyen, Tustin, CA 92780 (US); NGUYEN, Hien, Tustin, CA 92780 (US); HASBROOK, William Benjamin, Tualatin, Oregon 97062 (US); STUCK, Sean Michael, Portland, Oregon 97206 (US)
(74) Representative: Boult Wade Tennant LLP
(86) International application number: PCT/US2014/017781
(87) International publication number: WO 2014/130862

(56) References cited:
- WO-A2-2012/051358
- CN-A- 102 651 464
- CN-U- 202 364 273
- CN-U- 202 535 667
- US-A1- 2011 287 726
- US-A1- 2012 177 967
- US-A1- 2012 282 977
- US-B2- 8 367 235

## Description

### BACKGROUND

### Field

This application generally relates to covers for mechanical switches, and more particularly to protective cases for mobile electronic devices having switch covers configured to actuate mechanical switches on the mobile electronic devices.

### Description of the Related Art

Many mobile devices (e.g., mobile phones, digital assistants, mobile communication devices, handheld video game devices, handheld computing devices, personal music/video/content players, navigation systems, sensors, and storage devices) may be expensive, may have fragile equipment such as breakable glass touchscreens and lenses, may have easily scuffed decorative finishes, may have delicate internal electronic components, and may have easily broken or lost buttons and/or switches. People have also become more and more dependent on the data, contacts, and calendars stored in their mobile devices, even as the devices shrink and incorporate more expensive and more sensitive components. These expensive devices and the critical stored data can be protected with a relatively inexpensive protective case. Additionally as the mobile device form factor shrinks, the mechanical controls can similarly shrink.

Additionally, such mobile devices are typically designed to satisfy the needs of a wide array of consumers. While some consumers are comfortable with no case or decorative cases providing minimal protection, for other consumers, these devices are frequently used in harmful environments such that external covers capable of protecting the internal device from liquid, dust, crushing, and impact are beneficial. Consequently, users who wish to protect their mobile device in harmful environments (e.g., military, law enforcement, construction workers, and outdoors enthusiasts) often protect their cases with bulky, durable cases.

In WO 2012/051358 there is described an apparatus and/or system for housing a device. The apparatus includes a housing that is configured such that a device may be fitted within the housing and thereby be protected, such as from shocks and/or liquid. The housing may include top and bottom members that may be removably coupled together so as to form the housing. Each top and bottom member optionally includes front and back surfaces surrounded by a perimeter. The perimeter is defined by proximal and distal ends as well as opposing sides. The top and bottom members may include respective clasping mechanisms that extend along the perimeter of the top and bottom members. The clasping mechanisms are configured for coupling the top and bottom members with one another thereby sealing the housing, for instance, in a shock- proof and/or water tight seal.

One solution to access buttons through an external case is to include depressible pass-through buttons that do not directly expose the device, thereby providing additional protection without noticeable access ports. However, some mobile devices incorporate switches or toggles, which mechanically move from a first position to a second position. Sometimes the switches or toggles visibly identify the present status, such as through a 1 and 0 or red and green indicator. A depressible pass-through button on a case does not adequately control a switch or toggle on a mobile device and does not provide any visible identifier of the current switch or toggle status. Previous solutions often include pass-through holes in the case or thin, flexible membranes for switches and toggles. Pass-through holes and thin membranes reduce the protection provided by the case, and as the size of mobile devices shrinks, the space available to access a switch or toggle is more and more restricted, and any interference can negatively impact the accessibility of a switch or toggle. Additionally, very small switches sometimes require fingernail operation, and repetitive fingernail access on a membrane can damage or pierce the membrane, reducing the functionality and eliminating the waterproof or protective benefit. Further, pass-through holes and membranes frequently interrupt the aesthetics of the external case.

### SUMMARY

According to the present invention there is provided a cover for a switch, the cover comprising the features of claim 1. There is also provided a case for a mobile device incorporating the cover.

Accordingly there is disclosed herein, a mobile device peripheral that incorporates a convenient switch cover for a mobile device switch that can protect a switch on the mobile device, and the switch cover can adjust position to fit over the mobile device switch regardless of the mobile device switch's position. The switch cover is capable of moving in the same direction as the mobile device switch and externally indicating the position of the covered mobile device switch.

According to embodiments disclosed herein, the switch cover corresponds to an underlying switch on a mobile device. A switch can be built into a mobile device. The switch cover can be built into a cover for the mobile device. The switch cover has a switch base with an internal switch guide on an internal surface of the cover and an external feature on the external surface of the cover. The internal switch guide is shaped to fit over (for example, engage and/or mate with) the mobile device's switch when the mobile device is inserted into a case (or shell) that can house the mobile device. The case can include an additional back-up battery that can transfer electrical charge to the mobile device. The switch cover can be freely movable with minimal resistance, such that when the switch cover is in a relative "up" position while the mobile device's switch is in a relative "down" position, the switch cover will move to slip over the mobile device switch, without adjusting the mobile device switch position. Stated differently, the up position cover moves into a down position to correspond to the down position of the switch, and the switch does not move from the down position to the up position, when the mobile device is inserted into the case. Such an adjusting movement of the cover is achieved through the shape of the internal switch guide. The internal switch guide has two guide rails that sandwich the switch when the mobile device is in the case. One end of the internal switch guide can be open so that the mobile device switch can slide in. In some embodiments, the other end of the internal switch guide can be closed to help position the cover at a desired position relative the switch and/or the mobile device.

The internal switch guide can be substantially U-shaped, and the guiderails of the U can be either parallel or divergent to facilitate switch capture and/or movement of the cover to correspond to the position of the switch. In some embodiments, at the open end of the switch guide, the ends of the guide rails from which the switch would enter the internal switch guide are angled away from a centerline between the two guide rails such that when the internal switch guide is slid over the switch, the angled ends contact the switch to move the cover to match a position of the switch as the angled ends slide against the switch without moving the switch, for example, causing the cover to linearly translate at a rate corresponding to the angle of the angled ends.

The switch base can be disposed in a cavity of a shell or case. Edges, walls, and/or flanges (for example, guiding end portions) of the switch base can be sandwiched between an internal wall and an external wall of the shell. The sandwiching of the edges of the switch base with minimal friction can allow the cover to move relatively freely within a desired range and/or plane without the switch base slipping out of the cavity. The linear motion within a plane can be further guided with a guide feature disposed on the switch base, such as an elevated feature that slides within a guide path on an internal wall and/or external wall of the case.

In some embodiments, a shell including a switch cover for use with a switch of a portable electronic device can include a switch cover configured to move relative to the shell; and an opening in the shell engaging the switch cover while allowing the switch cover to move relative to the shell. The switch cover includes a base having an inner surface and an outer surface, the inner surface configured to face a switch of the portable electronic device when the portable electronic device is in the shell, the outer surface configured to face away from the switch; and a guide on the inner surface of the base, the guide configured to engage the switch of the portable electronic device when the portable electronic device is in the shell. The switch cover is configured such that the guide moves the switch of the portable electronic device when the portable electronic device is in the shell and the switch cover is moved relative to the shell. Stated differently, when the portable electronic device is in the shell and the switch cover is moved relative to the shell, the guide moves the switch of the portable electronic device.

In some embodiments, the shell can include one or more of the following: a cavity about the opening in shell, the cavity engaging the switch cover to allow movement of the switch cover along a desired direction; an outer wall and an inner wall, the outer wall comprising an outer wall recess formed in the outer wall, and the inner wall comprising an inner wall recess formed in the inner wall, wherein the outer wall recess and the inner wall recess form the cavity about the opening in the shell; and a cavity that engages the base of the switch cover, the cavity being shaped to correspond to a shape of the base to allow movement of the base along a desired direction, while inhibiting at least one of movement of the switch cover along other directions or rotational movement of the switch cover. The switch base may comprise a guiding end portion, the cavity engaging the guiding end portion to guide the base along the desired direction. The base may comprise two or more guiding end portions, the cavity engaging at least one of the guiding end portions to guide the base along the desired direction and to inhibit movement of the base beyond a perimeter of the cavity. The base may comprise a protruding portion configured to engage the shell to guide movement of the switch cover along the desired direction. The protruding portion may be on the inner surface of the base, the protruding portion engaging the inner wall of the shell to guide movement of the switch cover along the desired direction. The inner wall may comprise a guiding track, and the protruding portion protrude into the guiding track to guide movement of the switch cover in the desired direction along the guiding tracks. The shell may further comprise spacers positioned between the outer wall and the inner walls to maintain a predetermined width of the cavity between the outer wall recess and the inner wall recess The guide comprises a first guiderail on the inner surface of the base and a second guiderail on the inner surface of the base, the first guiderail corresponding to a first side of the switch of the portable electronic device, the second guiderail corresponding to a second side of the switch of the portable device, the first side of the switch opposite the second side of switch, wherein when the switch cover is moved in a first direction, the first guiderail pushes the first side of the switch to move the switch toward a first switch position, and wherein when the switch cover is moved in a second direction, the second guiderail pushes the second side of the switch to move the switch toward a second switch position. The first and second guiderails form a pathway between the first and second guiderails configured such that the switch slides between the first and second guiderails when the portable electronic device is being inserted into the shell The first and second guiderails may comprise divergent ends, wherein at least one of the divergent ends contacts the switch when the portable electronic device is being inserted into the shell, and wherein the divergent ends facilitate positioning the switch cover to correspond to a position of the switch as the portable electronic device is inserted into the shell. The base may comprise a back support on the inner surface of the base, wherein the guide and the back support have surfaces facing the portable electronic device when the portable electronic device is in the shell, and wherein the surfaces are on the same plane to position the switch cover at a predetermined distance from the portable electronic device. The predetermined distance from the portable electronic device may be constant between positions of the switch cover. The switch cover may comprise a handle on the outer surface to allow a user to move the switch cover relative to the shell. The switch cover may comprise a switch cover visual indicator that, when the portable electronic device is in the shell, corresponds to a switch visual indicator that indicates an operational mode of the portable electronic device. The switch cover visual indicator may be arranged so as to be not visible to a user in a first position of the switch cover, and visible to the user in a second position of the switch cover. The shell houses the portable electronic device and the guide may engage the switch of the portable electronic device. Movement of the switch may be a linear translation; and/or movement of the switch cover may be a linear translation.

In some embodiments, a protective case for use with a mobile electronic device having a switch that is configured to move between a first switch position and a second switch position can include a housing configured to at least partially enclose the mobile electronic device; and a switch cover movable between a first position and a second position. The switch cover may be configured to move the switch to the first switch position when the switch cover is moved to the first position. The switch cover may be configured to move the switch to the second switch position when the switch cover is moved to the second position.

In some embodiments, the protective case can include a cavity about the opening in shell, the cavity engaging the switch cover to allow movement of the switch cover between the first and second positions; a housing that comprises an outer wall and an inner wall, the outer wall comprising an outer wall recess formed in the outer wall, and the inner wall comprising an inner wall recess formed in the inner wall, wherein the outer wall recess and the inner wall recess form the cavity in the housing; and a cavity that engages a base of the switch cover, the cavity being shaped to correspond to a shape of the base to allow movement of the base between the first and second positions corresponding to the first and second switch positions, while inhibiting at least one of movement of the switch cover along other directions or rotational movement of the switch cover. The switch base may comprise a guiding end portion, the cavity engaging the guiding end portion to guide the base between the first and second positions. The base may comprise two or more guiding end portions, the cavity engaging at least one of the guiding end portions in the first position or the second position. The base may comprise a protruding portion configured to engage the housing to guide movement of the switch cover between the first and second positions. The protruding portion may engage the inner wall of the housing to guide movement of the switch cover between the first and second positions. The inner wall may comprise a guiding track, and the protruding portion extend into the guiding track to guide movement of the switch cover between the first and second positions along the guiding tracks. The housing may further comprise spacers positioned between the outer wall and the inner walls to maintain a predetermined width of the cavity between the outer wall recess and the inner wall recess. The switch cover comprises a first guide on an inner surface of the switch cover and a second guide on the inner surface of the switch cover, the inner surface configured to face the mobile electronic device, the first guide corresponding to a first side of the switch of the mobile electronic device, the second guide corresponding to a second side of the switch of the portable device, the first side of the switch opposite the second side of switch, wherein when the switch cover is moved in a first direction, the first guide pushes the first side of the switch to move the switch toward a first switch position, and wherein when the switch cover is moved in a second direction, the second guide pushes the second side of the switch to move the switch toward a second switch position. The first and second guides form a pathway between the first and second guides configured such that the switch slides between the first and second guides when the mobile electronic device is being inserted into the housing. The first and second guides may comprise divergent ends, wherein at least one of the divergent ends contacts the switch when the mobile electronic device is being inserted into the housing, and wherein the divergent ends facilitate positioning the switch cover to correspond to a position of the switch as the mobile electronic device is inserted into the housing. The switch cover may comprise a back support facing the mobile electronic device when the mobile device is in the housing, wherein the back support comprises a flat surface to position the switch cover at a predetermined distance from the mobile electronic device. The predetermined distance from the mobile electronic device may be constant between the first and second positions. The switch cover may comprise a handle on the outer surface to allow a user to move the switch cover between the first and second positions. The switch cover may comprise a switch cover visual indicator that, when the mobile electronic device is in the housing, corresponds to a switch visual indicator that indicates an operational mode of the mobile electronic device. The switch cover visual indicator may be arranged so as to be not visible to a user in the first position of the switch cover, and visible to the user in the second position of the switch cover. The housing may at least partially enclose the mobile electronic device and the switch cover operably connect to the switch of the mobile electronic device. Movement of the switch between the first switch position and the second switch position may be a linear translation; and/or movement of the switch cover between the first position and the second position may be a linear translation.

In some embodiments, the cover for a switch includes a switch base having a first surface facing toward the switch and a second surface facing away from the switch; an internal switch capture guide, on the first surface, with a first guide rail that corresponds to a first side of the switch and a second guide rail corresponding to a second side of the switch when the switch is disposed in the cover; and an external feature on the second surface approximately corresponding to the position of the switch.

In some embodiments, the cover can include an imaginary line from the first guide rail to the second guide rail that would align with a direction that the switch moves. The internal switch capture guide may have at least one open side. The internal switch capture guide may approximate a U-shape. The two guide rails may be slightly divergent such that when the internal switch capture guide is slid over a switch, the cover will move to match a position of the switch. Alternatively, the two guide rails may be substantially parallel, but the ends are angled in a way that when the internal switch capture guide is slid over a switch, the cover will move to match a position of the switch The switch base may be disposed in a cavity in a shell. A portion of the switch base may be sandwiched between an internal wall and an external wall of the shell The portion of the switch base may be the entire outline of the switch base. The switch base may move relative to the shell in the direction that the switch moves The switch base may incorporate a directional guide feature. The directional guide feature may be a raised portion on the switch base that corresponds to a path in the shell. The path in the shell may be parallel to the direction that the switch moves. The external feature may mirror a shape of the switch. The switch base may be substantially planar. The internal switch capture guide may adjust to fit over the switch regardless of switch orientation.

In some embodiments, the cover can further include an imaginary line from the first guide rail to the second guide rail that aligns with a direction that the switch is configured to move. The internal switch capture guide may have at least one open side for accepting the switch. The internal switch capture guide may approximate a U-shape. The first and second guide rails may be slightly divergent such that when the internal switch capture guide is slid over the switch, the cover will move to match a position of the switch. Alternatively, the first and second guide rails may be substantially parallel, but ends of the first and second guide rails are angled in a way that when the internal switch capture guide is slid over the switch, the cover will move to match a position of the switch. The switch base may be disposed in a cavity in a shell. A portion of the switch base may be sandwiched between an internal wall and an external wall of the shell. The portion of the switch base may be the entire outline of the switch base. The switch base may move relative to the shell in a direction that the switch is configured to move. The switch base may incorporate a directional guide feature. The directional guide feature may be a raised portion on the switch base that corresponds to a path in the shell. The path in the shell may be parallel to the direction that the switch is configured to move. The external feature may mirror a shape of the switch. The switch base may be substantially planar. The internal switch capture guide may adjust to fit over the switch regardless of switch orientation.

In some embodiments, the case for a mobile device incorporates the cover, and the switch is attached to the mobile device. The internal switch capture guide can adjust to fit over the switch regardless of switch orientation when the mobile device is inserted into the case. The case can include a battery. In some embodiments the battery of the case can charge the mobile device.

The foregoing is a summary and contains simplifications, generalization, and omissions of detail. Those skilled in the art will appreciate that the summary is illustrative only and is not intended to be in any way limiting. Other aspects, features, and advantages of the devices and/or processes and/or other subject matter described herein will become apparent in the teachings set forth herein. The summary is provided to introduce a selection of concepts in a simplified form that are further described below in the Detailed Description. This summary is not intended to identify key features or essential features of any subject matter described herein.

### BRIEF DESCRIPTION OF THE DRAWINGS

The foregoing and other features of the present disclosure will become more fully apparent from the following description, taken in conjunction with the accompanying drawings. Understanding that these drawings depict only some examples in accordance with the disclosure and are, therefore, not to be considered limiting of its scope, the disclosure will be described with additional specificity and detail through use of the accompanying drawings.
Figure 1A is a side, top, perspective view of a shell or case having a switch cover in a first position.
Figure 1B is a detailed view of a portion of the shell of Figure 1A.
Figure 2A is a side, top, perspective view of a shell or case having a switch cover in a second position.
Figure 2B is a detailed view of a portion of the shell of Figure 2A.
Figure 3A is a side, top, perspective view of a shell or case having an opening.
Figure 3B is a side, top, perspective view of a shell or case with a battery.
Figure 4 is an inner, side, top, perspective view of a shell.
Figure 5 is a side, top, perspective view of a shell.
Figure 6 is a side, top, perspective view of an inner wall of a shell with a mobile device.
Figure 7 is a side, top, perspective view of an inner wall of a shell with a switch cover in a first position.
Figure 8 illustrates an inner wall of a shell with a switch cover in a second position.
Figure 9 is an inner side, top, perspective view of an outer wall of a shell.
Figure 10 is an inner side, top, perspective view of an outer wall of a shell with a switch cover in a first position.
Figure 11 illustrates an outer wall of a shell with a switch cover in a second position.
Figures 12-15 illustrate an example of a switch cover.
Figures 16-19 illustrate another example of a switch cover.
Figures 20A-B and 21A-B illustrate a switch cover incorporated into a shell.
Figures 22A-B show a partial cutout view of a shell with a mobile device being inserted into the shell.
Figures 23A-B show a partial cutout view of a shell with a mobile device being inserted into the shell.
Figures 24 is a side, perspective cross-sectional view of a shell with a mobile device.
Figure 25 is a cross-sectional top view of a switch cover in a shell.
Figure 26 is a cross-sectional top view of another example of a switch cover in a shell.

### DESCRIPTION

In the following description, reference is made to the accompanying drawings, which form a part hereof. In the drawings, similar symbols typically identify similar components, unless the context dictates otherwise. The illustrative examples described in the description and drawings are not meant to be limiting. Other examples may be utilized, and other changes may be made, without departing from the scope of the subject matter presented here. It will be readily understood that the aspects of the present disclosure, as generally described herein, and illustrated in the Figures, may be arranged, substituted, combined, and designed in a wide variety of different configurations, all of which are explicitly contemplated and made a part of this disclosure.

Further, the following description contains simplifications, generalization, and omissions of detail. Those skilled in the art will appreciate that the description is illustrative only and is not intended to be in any way limiting. This description is not intended to identify key features or essential features of any subject matter described herein.

Various embodiments disclosed in this application generally relate to covers for mechanical switches, particularly to covers for mechanical switches on mobile devices (for example, smart phones). The covers can be incorporated into cases or shells protecting the mobile device. The covers can allow for convenient access to a mobile device switch or toggle (for example, without reducing protection, interrupting aesthetic, and/or reducing performance/accessibility).

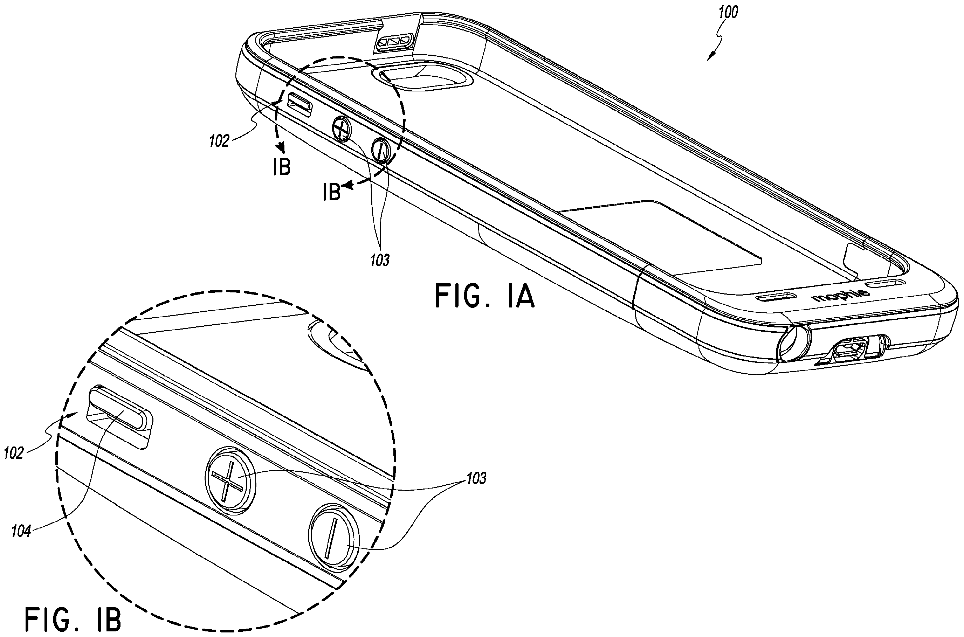

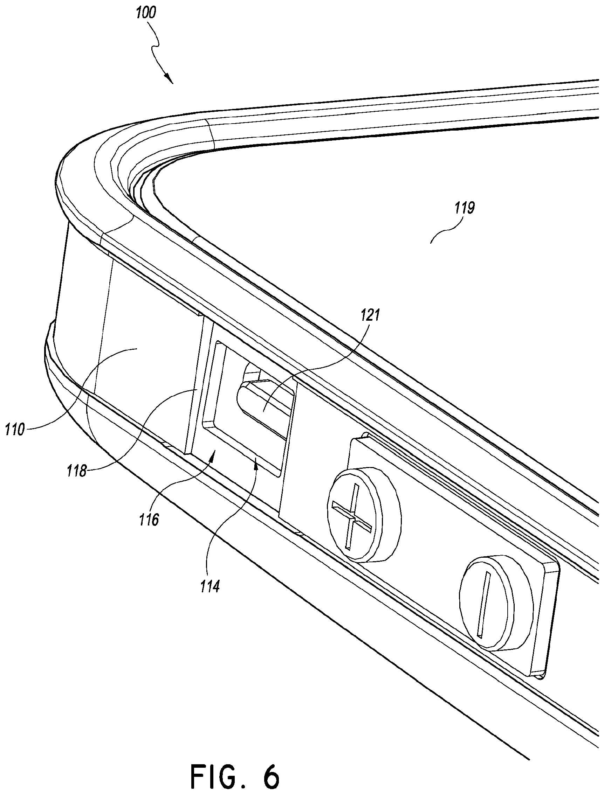

Figure 1A is a side, top, perspective view of a shell 100 (for example, a case or a battery case). The shell or case 100 can be used to protect a portable electronic device 119 (e.g., see Figure 6). The portable electronic device can include a mobile device, mobile phone, or tablet. The portable electronic device 119 can have a switch or toggle 121 built into the mobile device 119 (e.g., see Figures 6, 22A-B, and 23A-B). A switch cover 102 can be integrated into the shell or case 100. The switch cover 102 can be positioned to engage and/or mate with the switch 121 of the mobile device 119 as discussed herein. The shell 100 can have other features to engage and/or mate with other controls of the mobile device 119. For example, as illustrated in Figure 1A-B, the shell 100 can have volume buttons and/or rockers 103. The volume buttons 103 can engage and/or mate with volume controls of the mobile device 119.

Figure 1B is a partial view of a shell 100 illustrating an enlarged view of the switch cover 102. Figure 1B illustrates the switch cover 102 in a first position. The switch cover 102 can move in a linear fashion or have a linear translational movement as discussed herein. For example, the switch cover 102 can move up and down. In some embodiments, the switch cover 102 can move side to side. The first position as illustrated in Figure 1B can be considered an up position. References to up and down can refer to an orientation in which the screen (for example, touchscreen) of the mobile device 119 would face upward, even though the case 100 and mobile device 119 could be positioned in various other orientations during use. The up position, or first position, can correspond to the switch cover 102 positioning the switch 121 of the mobile device 119 into a normal (e.g., not silent or auditory) mode of the mobile device 119.

The switch cover 102 can have a handle 104, for example, an extension or protrusion as discussed herein. The handle 104 can be an elongated shape (for example, a bar shape) to provide a lever or gripping portion to facilitate linearly translating the switch cover 102 by the user, although various other shapes can be used. In some embodiments, the handle 104 can protrude beyond a periphery of the shell 100 to facilitate gripping of the switch cover 102 by the user in order to move (e.g., to linearly translate) the switch cover 102 as discussed herein. In some embodiments, the switch cover 102 can be flush with the periphery of the shell 100 or recessed below the periphery of the shell 100, while still allowing the user to engage the cover 102 to move (e.g., linearly translate) the cover 102.

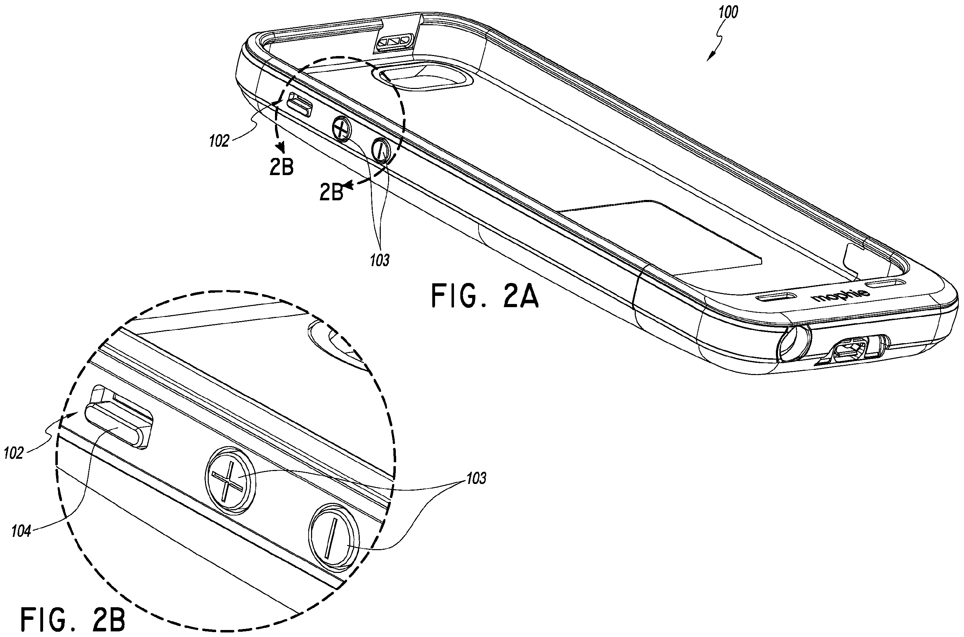

Figure 2A is a side, top, perspective view of a shell 100. Figure 2B is a partial view of the shell 100 illustrating an enlarged view of the switch cover 102. Figure 2B illustrates the switch cover 102 in a second position. The second position as illustrated in Figure 2B can be considered a down position. The down position or second position can correspond to the switch cover 102 positioning the switch 121 of the mobile device 119 into a quiet (e.g., vibrate or silent) mode of the mobile device 119. Other configurations are possible. For example, the up position or first position of the switch cover can be configured to position the switch 121 into the quiet (e.g. vibrate or silent) mode, and the down position or second position can be configured to position the switch 121 into the normal (e.g., not silent or auditory) mode.

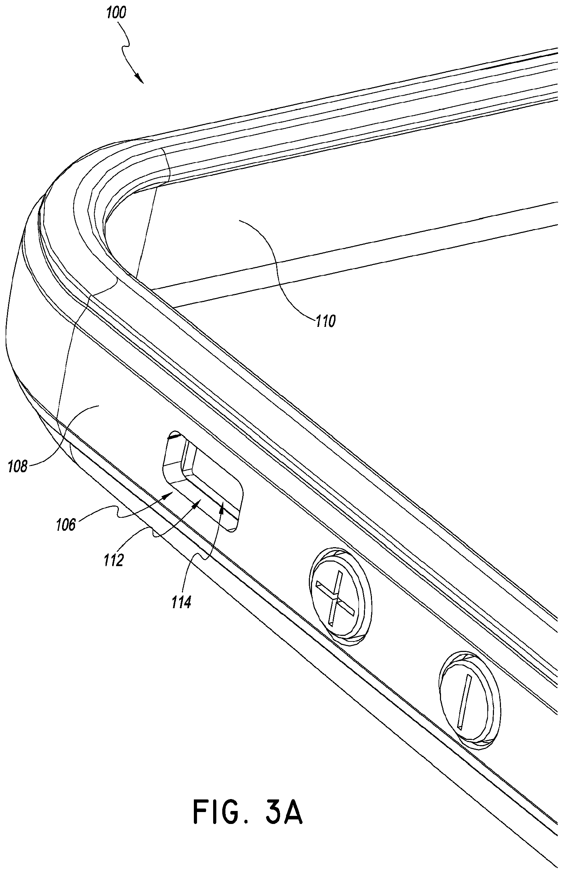

Figure 3A is a side, top, perspective view of an opening 106 in the shell or case 100. The opening (for example, cutout or lumen) 106 can be shaped to house accept, engage, and/or mate with the switch cover 102 as discussed herein. The opening 106 can be generally rectangular or square. In some embodiments, the opening 106 can be other suitable shapes to correspond to the shape or shapes of the switch cover 102. For example, the opening 106 may be generally round, cylindrical, and/or a combination of shapes, such as rectangular and having rounded or circular sides or corners. The opening 106 can have open ends on both sides to accept the switch cover 102. The switch cover 102 can be inserted into the opening 106 and secured while allowing movement of the cover 102 as discussed herein. The opening 106 can be positioned in the shell 100 such that when the opening 106 houses the switch cover 102 and the mobile device 119 is inserted into the shell 100, the switch cover 102 can engage or toggle the switch 121 of the mobile device 119 as discussed herein.

In some embodiments, the shell 100 may be made or formed from two or more walls. As illustrated in Figure 3A, the shell may comprise an outer wall 108 and inner wall 110. The outer wall 108 may envelope and/or cover wholly or partially the inner wall 110. The outer wall 108 may provide protection for the shell 100, components of the shell 100 (for example, the cover 102), and/or the mobile device 119 inserted therein. The inner wall 110 may be shaped and sized to accept the mobile device 119 and secure the mobile device 119 in a predetermined position within the shell 100.

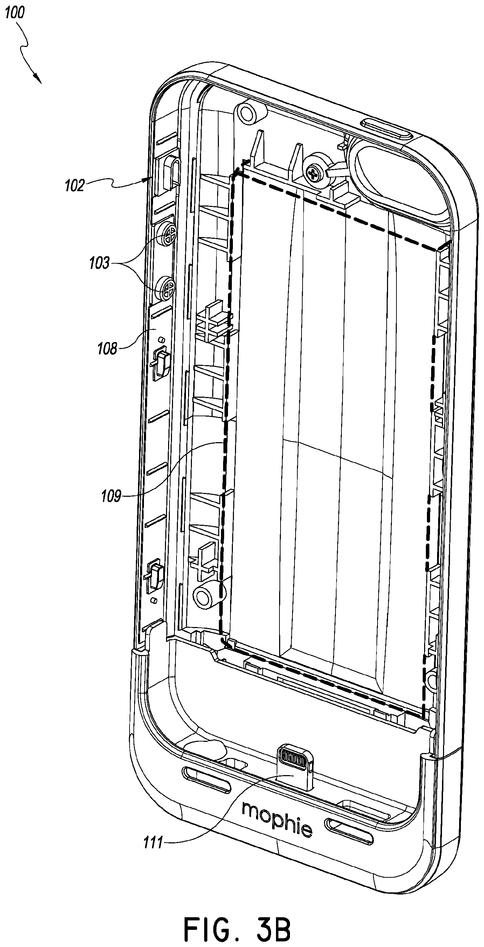

Figure 3B is a side, top, perspective view of shell or case 100 with a battery 109. The case 100 can include a battery 109 (e.g., housed between the inner wall 110 and the outer wall 108). The battery 109 is illustrated by dashed lines in Figure 3B, showing an example location for the battery 109 in the case 100. The case 100 can include an electrical connector 111 that is electrically coupled to the battery 109 and configured to engage a port on the mobile device 119 such that the battery 109 of the case 100 can be electrically connected to the mobile device 121 to selectively charge the mobile device 121 when, for example, an internal battery of the mobile device 121 is depleted of charge or low on power.

Returning to Figure 3A, the opening 106 can be formed from two corresponding openings in the outer wall 108 and the inner wall 110. The outer wall 108 can have an outer opening (for example, cutout or lumen) 112 to accept and/or engage the switch cover 102 as discussed herein. The outer opening 112 can be sized and shaped to allow a desired motion of the switch 102, and in particular the handle 104, as discussed herein. For example, the outer opening 112 can be sized and shaped to allow and/or permit the movement of the handle 104 by the user to move the cover 102 into a desired position (for example, a first or second position as discussed herein). The outer opening 112 can be generally rectangular or square. In some embodiments, the outer opening 112 can be other suitable shapes to correspond to the shape of the switch cover 102. For example, the outer opening 112 may be generally round, cylindrical, and/or a combination of shapes, such as rectangular and having rounded or circular sides or corners. In some embodiments, the outer opening 112 can be sized and shaped to accept the handle 104 of the cover 102 to protrude through the outer opening 112 and allow movement of the handle 104 to position the cover 102 as discussed herein.

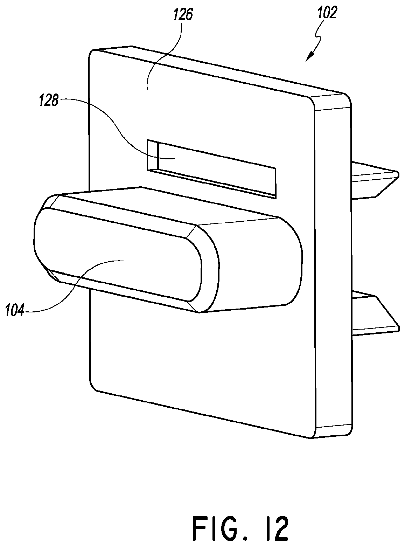

The inner wall 110 can have an inner opening (for example, cutout or lumen) 114 to accept and/or engage the switch cover 102 as discussed herein. The inner opening 114 can be sized and shaped to allow a desired motion of the switch 102, and in particular the internal switch guide 130 (see Figures 12-19) as discussed herein. For example, the inner opening 114 can be sized and shaped to allow and/or permit the movement of the internal switch guide 130 to move the switch 121 of the mobile device 119 into a desired position (for example, a first or second position as discussed herein).

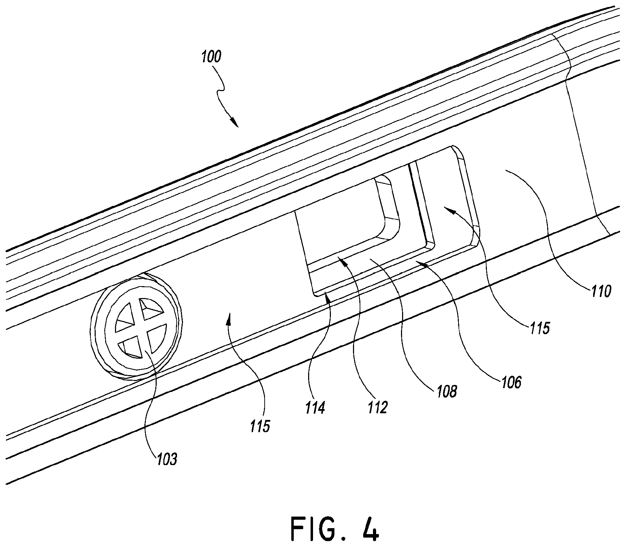

Figure 4 is an inner, side, top, perspective view of a shell or case 100. As discussed in reference to Figure 3A, the shell 100 can have an outer wall 108 and an inner wall 110 with an outer opening 112 and an inner opening 114, respectively. As illustrated in Figure 4, the inner opening 114 can be formed in or housed in a channel 115 formed in the inner wall 110. The channel 115 can be a relatively thinned wall region of the inner wall 110. The cannel 115 can be formed in the inner wall 110 along a side of the shell 100. The channel 115 can span a majority of the side of the shell 100. The span of the channel 115 can correspond to aligning the switch 121 and other controls of the mobile device 119 such that the cover 102 can engage the switch 121 as discussed herein and the volume rockers 103 can engage the volume controls of the mobile device 119.

The channel 115 can provide space or clearance between the inner wall 110 and the mobile device 119. The clearance provided by the channel 115 can allow for functionality, engagement, and/or mating of the switch cover 102 and other control element(s) (for example, volume controls 103) with the switch 121 and other control element(s) of the mobile device 119 as discussed herein. For example, the channel 115 can allow and/or facilitate the mobile device 119 to be inserted into the shell 100 when the switch 121 protrudes beyond a periphery of the mobile device 119. Similarly, the channel 115 can allow and/or facilitate insertion of the mobile device 119 into the shell 100 when other mobile control element(s) (for example, volume controls) of the mobile device 119 protrude beyond the periphery of the mobile device 119.

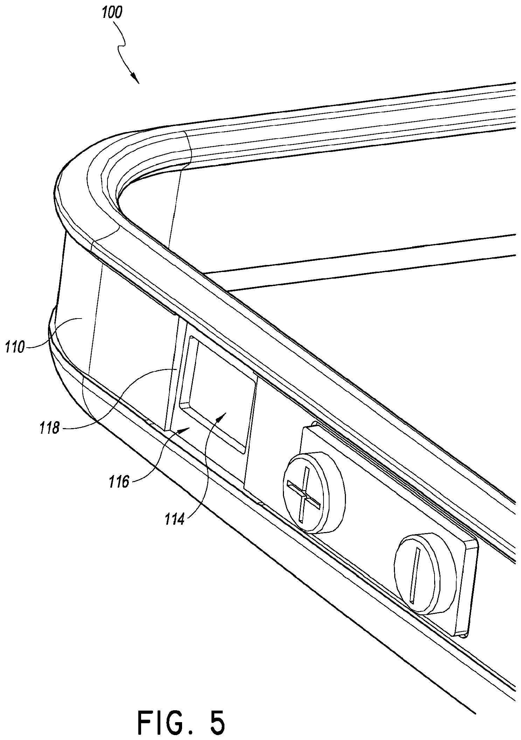

Figure 5 is a side, top, perspective view of a shell 100. An inner opening 114 can be formed in the inner wall 110 of the shell 100. The inner opening 114 can be generally rectangular or square. In some embodiments, the inner opening 114 can be other suitable shapes to correspond to the shape of the switch cover 102.
For example, the inner opening 114 may be generally round, cylindrical, and/or a combination of shapes, such as rectangular and having rounded or circular sides or corners. As illustrated in Figure 3A and 4, the outer opening 112 and inner openings 114 can correspond in shape. Stated differently, the outer opening 112 and inner opening 114 can have similar shapes (for example, rectangular as illustrated). In some embodiments, the outer opening 112 and inner opening 114 may be different shapes to correspond to and accept/allow movement of the handle 104 and/or internal switch guide 130, respectively, as discussed herein.

The inner opening 114 can be formed in the inner wall 110 at a relatively thinned wall region 116 of the inner wall 110. The thinned wall region 116 can also be considered an inner wall recess 116 about or around the inner opening 114. The inner wall recess 116 can correspond with or be positioned at a region corresponding to the channel 115 of the inner wall 110 (e.g., see Figure 4). In some embodiments, the corresponding positions (directly opposite sides of the inner wall 110) of the channel 115 and the inner wall recess 116 can form a relatively thin or thinnest portion of the inner wall 110 about the periphery of the shell 100. The thin region of the corresponding positions of the channel 115 and the inner wall recess 116 can reduce the size and bulk of the case 100, as well as the switch cover 102 spanning a reduced size of the case 100, while still allowing for the functionality and engagement of switch 121 as discussed herein.

The inner wall recess 116 can be shaped and sized to house accept, engage, and/or mate with a base 126 (see Figures 12-19) of the switch cover 102. The inner wall recess 116 can have recess edges or walls 118 that house the base 126 of the switch cover 102. For example, inner wall recess edges 118 can be positioned to permit movement of the cover 102 between the first and second positions (for example, up and down), while substantially restricting or inhibiting movement of the cover 102 in other directions relative to the movement between the first and second positions (for example, substantially restricting or inhibiting side to side or rotational movement of the switch cover 102). The inner wall recess edge 118 can connect the inner wall recess 116 to the inner wall 110. The inner wall recess edges 118 can be substantially perpendicular to a plane(s) formed by the inner wall 110 and/or the inner wall recess 116. The angle of the inner wall recess edges 118 from the inner wall recess 116 to the inner wall 110 can correspond to an angle of walls or edges of the base 126 of the cover 102.

Figure 6 is a side, top, perspective view of an inner wall 110 of the shell 100 with a mobile device 119 inserted or otherwise coupled thereto. The mobile device 119 can have a switch 121 for controlling a mode of the mobile device 119. For example, Figure 6 illustrates the switch 121 in a down or second position. The down position (for example, the second position) of the switch 121 can correspond to a vibrate (e.g., silent) mode of the mobile device 119, as discussed herein. The up position (for example, the first position) of the switch 121 can correspond to a normal (auditory or non silent) mode of the mobile device 119, as discussed herein. The inner opening 114 of the inner wall 110 can be sized and shaped to allow the switch 121 to be positioned within or be encircled (circumscribed) by a periphery of the inner opening 114. The inner opening 114 can be sized and shaped to allow the switch 121 to move (e.g., slide) between the first and second positions of the switch (e.g., within the periphery of the inner opening 114).

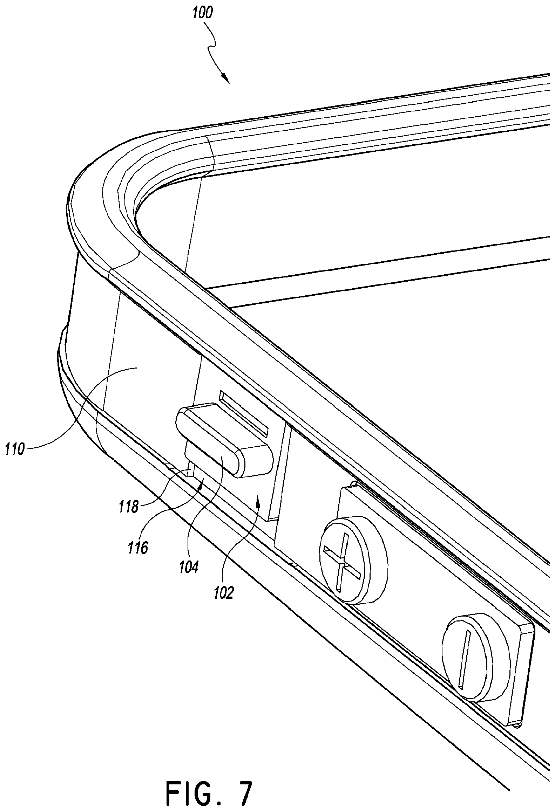

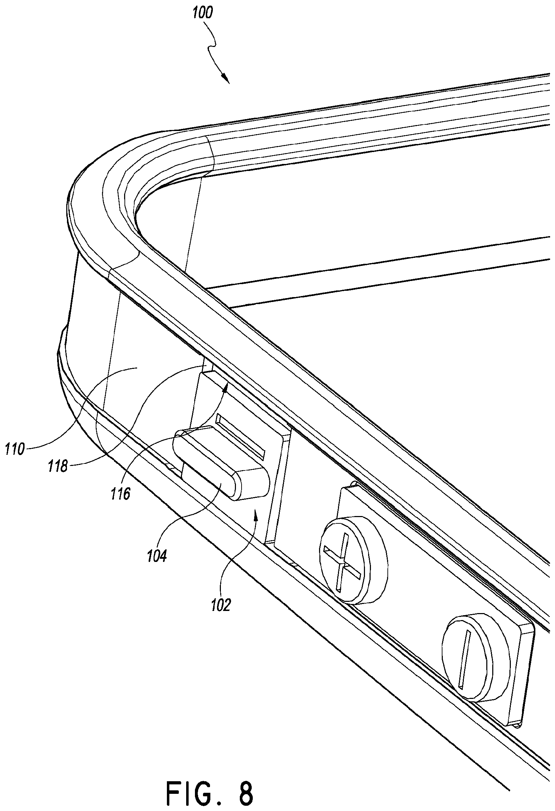

Figure 7 is a side, top, perspective view of an inner wall 110 of the shell 100 with a switch cover 102. Figure 7 illustrates the switch cover 102 in a first position, as discussed herein. Figure 8 illustrates the switch cover 102 in a second position, as discussed herein. As illustrated in Figures 7 and 8, in some embodiments, the switch cover 102 can move in a linear fashion or have a linear translational movement in a plane of the inner wall recess 116. The switch cover 102 can move from the first position (for example, the up position corresponding to the cover 102 illustrated in Figure 7) to the second position (for example, the down position corresponding to the cover 102 illustrated in Figure 8) and vice versa. Stated differently, the cover 102 can move between the first position (for example, the up position corresponding to the cover 102 illustrated in Figure 7) and the second position (for example, the down position corresponding to the cover 102 illustrated in Figure 8) or any desired position therebetween.

As illustrated in Figures 7 and 8, the inner wall recess 116 can be sized and shaped to permit the cover 102 to move up and down while the inner wall recess edge 118 restricts or inhibits movement of the cover 102 side to side. For example, the inner wall recess edges 118 that are parallel (for example, side walls) to the desired linear direction of movement of the cover 102 can be spaced from each other to provide room for the cover 102 to move between the inner wall recess edges 118 that are perpendicular (for example, upper and lower walls) for the cover 102 to move between the first and second positions. The inner wall recess edges 118 that are parallel to the desired direction of movement of the cover 102 (for example, side walls) can be spaced from each other to provide clearance for the cover 102 to substantially freely or with minimal friction move between the upper and lower walls of the inner wall recess edges 118 corresponding to the first and second positions. But the side walls of the inner wall recess edges 118 can be spaced such that side movement of the cover 102 between the side walls of the inner wall recess edges 118 is restricted or inhibited. For example, movement perpendicular to the desired direction of movement between the first and second positions can be restricted or inhibited. Stated differently, the side recess edges 118 can be spaced apart by an amount or distance that is the same or slightly larger than a dimension of the switch cover 102 (for example, horizontal dimension) for the switch cover 102 to move without binding (for example, with minimal friction, while side to side (for example, horizontal) movement is impeded. The upper or lower (or top and bottom) recess edges 118 can be spaced apart by an amount or distance that is larger than the dimension of the switch cover 102 (for example, vertical dimension) to provide clearance for the switch cover to move in the vertical dimension (for example, up and down or between first and second positions, as discussed herein).

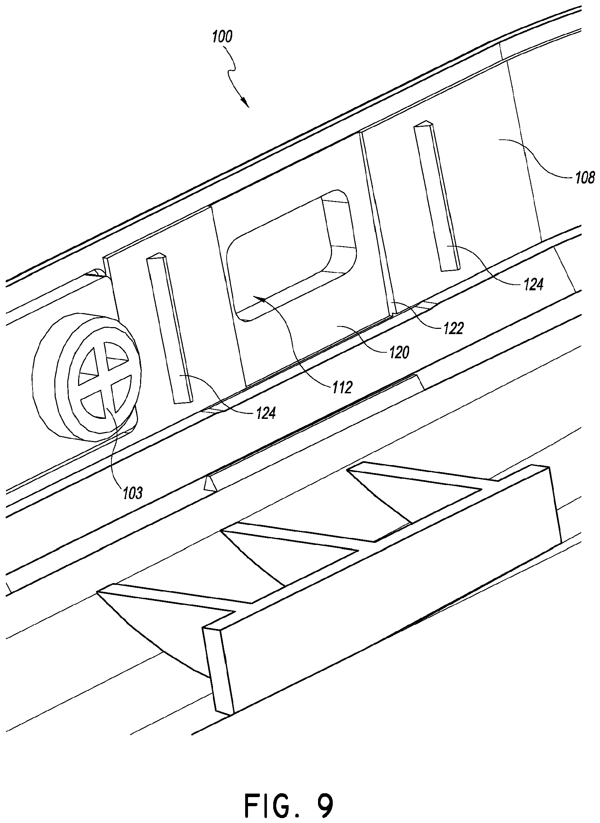

Figure 9 is an inner side, top, perspective view of an outer wall 108 of the shell 100. An outer opening 112 can be formed in the outer wall 108. The outer opening 112 can be formed in the outer wall 108 at a relatively thinned wall region 120 of the outer wall 108. The thinned wall region 120 can also be considered an outer wall recess 120 about or around the outer opening 112. The outer opening 112 can be generally rectangular or square. In some embodiments, the outer opening 112 can be other suitable shapes to correspond to the shape of the switch cover 102. For example, the outer opening 112 may be generally round, cylindrical, and/or a combination of shapes, such as rectangular and having rounded or circular sides or corners.

The outer wall recess 120 can be shaped and sized to house accept, engage, and/or mate with the base 126 of the switch cover 102. The outer wall recess 120 can have outer wall recess edges or edges 122 (e.g., that house the base 126 of the cover 102). For example, outer wall recess edges 122 can be positioned to permit movement of the cover 102 between the first and second positions (for example, up and down), while substantially restricting or inhibiting movement of the cover 102 in other directions relative to the movement between the first and second positions (for example, substantially restricting or inhibiting side to side or rotational movement of the switch cover 102). The outer wall recess edges 122 can connect the outer wall recess 120 to the outer wall 108. The outer wall recess edges 122 can be substantially perpendicular to a plane(s) formed by the outer wall 108 and/or the outer wall recess 120. The angle of the outer wall recess edges 122 from the outer wall recess 120 to the outer wall 108 can correspond to an angle of walls of the base 126 of the cover 102.

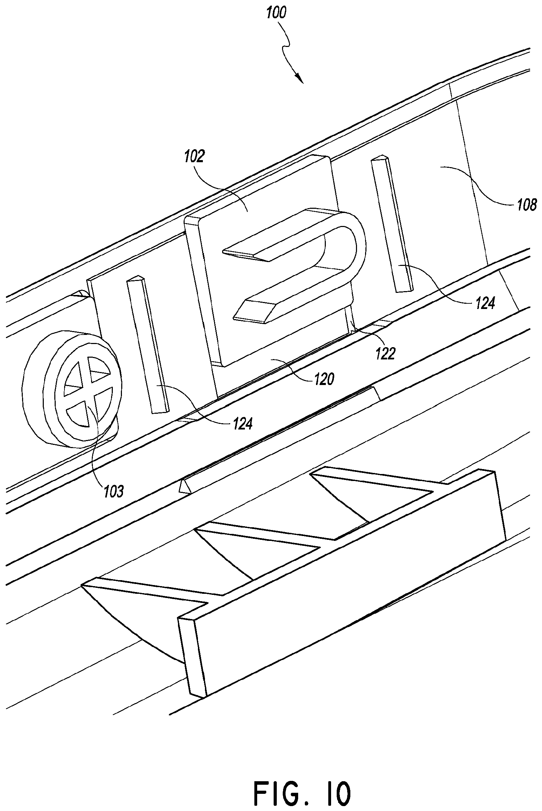

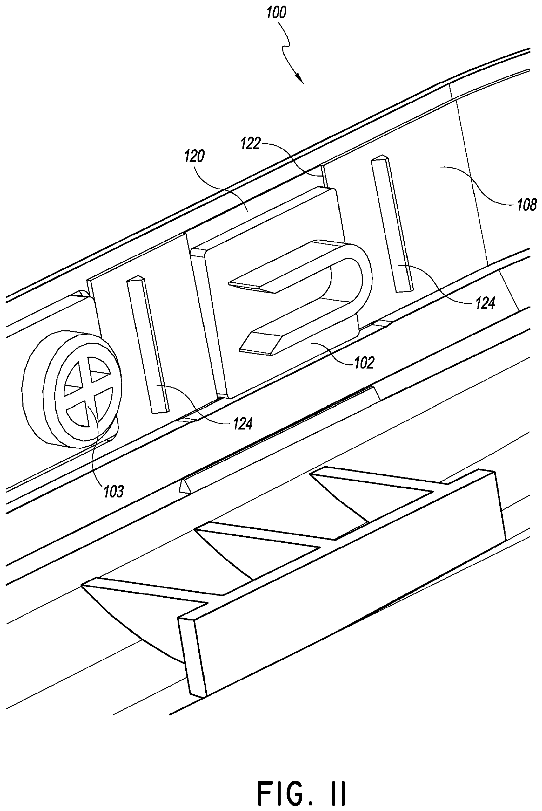

Figure 10 is an inner side, top, perspective view of an outer wall 108 of the shell 100 with a switch cover 102. Figure 10 illustrates the switch cover 102 in a first position, as discussed herein. Figure 11 illustrates the switch cover 102 in a second position, as discussed herein. As illustrated in Figures 10 and 11, in some embodiments, the switch cover 102 can move in a linear fashion or have a linear translational movement in a plane of the outer wall recess 120. The cover 102 can move from the first position (for example, the up position corresponding to the cover 102 illustrated in Figure 10) to the second position (for example, the down position corresponding to the cover 102 illustrated in Figure 11) and vice versa. Stated differently, the cover 102 can move between the first position (for example, the up position corresponding to the cover 102 illustrated in Figure 10) and the second position (for example, the down position corresponding to the cover 102 illustrated in Figure 11) or any desired position therebetween.

As illustrated in Figures 10 and 11, the outer wall recess 120 can be sized and shaped to permit the cover 102 to move up and down while the outer wall recess edge 122 restricts or inhibits movement of the cover 102 side to side. For example, the outer wall recess edges 122 that are parallel (for example, side walls) to the desired linear direction of movement of the cover 102 can be spaced from each other to provide room for the cover 102 to move between the outer wall recess edges 122 that are perpendicular (for example, upper and lower walls) for the cover 102 to move between the first and second positions. The outer wall recess edges 122 that are parallel to the desired direction of movement of the cover 102 (for example, side walls) can be spaced from each other to provide clearance for the cover 102 to substantially freely or with minimal friction move between the upper and lower walls of the outer wall recess edges 122 corresponding to the first and second positions. But the side walls of the outer wall recess edges 122 can be spaced such that side movement of the cover 102 between the side walls of the outer wall recess edges 122 is restricted or inhibited. For example, movement perpendicular to the desired direction of movement between the first and second positions is inhibited or inhibited. Stated differently, the side recess edges 122 can be spaced apart by an amount or distance that is the same or slightly larger than a dimension of the switch cover 102 (for example, horizontal dimension) for the switch cover 102 to move without binding (for example, with minimal friction, while side to side (for example, horizontal) movement is impeded. The upper or lower (or top and bottom) recess edges 122 can be spaced apart by an amount or distance that is larger than the dimension of the switch cover 102 (for example, vertical dimension) to provide clearance for the switch cover to move in the vertical dimension (for example, up and down or between first and second positions, as discussed herein).

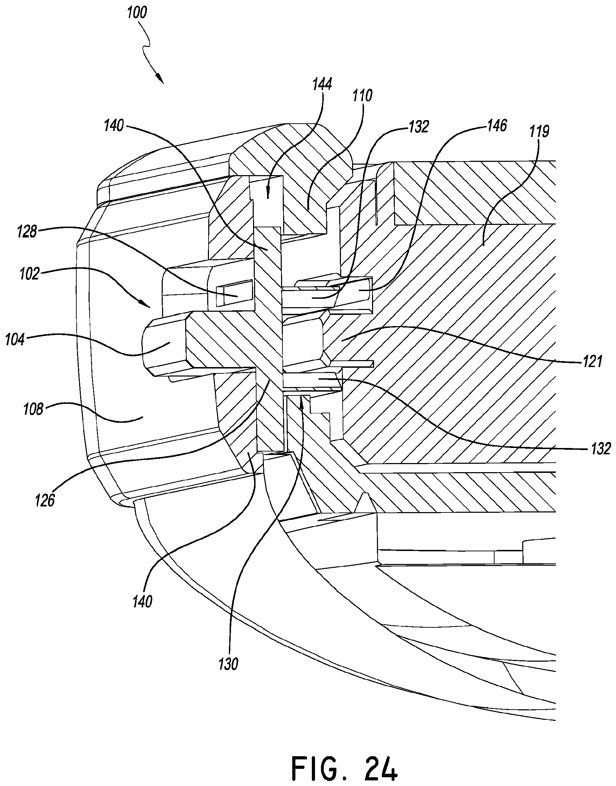

A method of assembly of the shell 100 can include placing the switch cover 102 into the inner wall recess 116 of the inner wall 110 or into the outer wall recess 120 of the outer wall 108. The outer wall 108 can be placed over the inner wall 110 such that the inner wall recess 116 of the inner wall 110 corresponds with the outer wall recess 120 of the outer wall 108 to form a cavity 144 (see Figure 24) within which the switch cover 102 can be housed and allowed to move as discussed herein. The inner wall recess edges 118 can align with the outer wall recess edges 122 to form a periphery or perimeter of the cavity 144 that inhibits certain movement and allows for a desired movement of the switch cover 102 as discussed herein. For example, the aligned recess edges 118, 122 that are parallel to the desired direction of movement of the cover 102 can be spaced to provide clearance for the cover 102 to substantially freely or with minimal friction move between the upper and lower (e.g., perpendicular to the movement of the cover 102) walls of the inner wall recess edges 118, 122 corresponding to the first and second positions, while inhibiting or restricting movement of the switch cover 102 in other directions. In some embodiments, one of the recess 116 or the recess 120 can have a depth sufficient to form the cavity 144, and the other of the recess 116 or 120 can be omitted.

As illustrated in Figures 9-11, the outer wall 108 can have spacers or rails 124 to provide a desired spacing or clearance between the outer wall 108 and the inner wall 110. The spacers 124 can help maintain a desired or predetermined size and shape of the cavity 144, including a predetermined width or distance of the cavity 144 between the inner and outer walls 108, 110 to permit movement of the base 126 within the cavity 144. A particular size and shape of the cavity can allow for the cover 102 to move as discussed herein with minimal friction even when pressure may be applied to the shell 100 that would otherwise contort the size and shape of the cavity 144. In some embodiments, the inner wall 110 can have spacers 124 disposed thereon additionally or in lieu of the spacers 124 on the outer wall 108 as discussed herein. In some embodiments, the spacers 124 can rest in, engage, interlock with, and/or mate with corresponding grooves or cutouts in an opposing wall of the shell 100 (e.g., outer wall 108 or inner wall 110) that the spacers 124 protrude or extend toward from the wall of the shell 100 that the spacers 124 are disposed on.

Figures 12-15 illustrate an example of a switch cover 102. Figure 12 is an exterior side, perspective view of the switch cover 102. The switch cover 102 can include a handle 104 for a user to move the switch cover 102 as discussed herein. The cover can include a base 126. The handle 104 can be attached, disposed, and/or formed to protrude from the base 126. The handle 104 can be positioned on an exterior surface or outer surface of the base 126 as illustrated in Figure 12. The exterior or outer surface of the base 126 can be a surface of the cover 102 that faces the exterior of the shell 100 and/or that is configured to face away from the mobile device 119.

The switch cover 102 can include a visual indicator 128 as a status indicator. The visual indicator 128 can indicate the position of the switch 121 on the mobile device 119. The visual indicator 128 can be positioned on the base 126. The visual indicator 128 can be on an exterior or outer surface of the base 126 (e.g., on the same surface of the cover 102 as the handle 104) to be viewed by a user. The visual indicator 128 can be an indentation (for example, a cutout) in the base 126. In some embodiments, the visual indicator 126 can be colored (e.g., red) or can otherwise be visually distinguishable from the area of the base 126 around the visual indicator 128. In some embodiments, a colored dot, colored bar, or other visual indicator can be used instead of a physical indentation or cutout in the base 126 of the cover 102. When the switch cover 102 is in the first position (for example, configured to position the switch 121 in a first state associated with, for example, a normal auditory mode of the mobile device 119), the visual indicator 128 may be covered by a portion of the exterior wall 108, such that the visual indicator 128 is hidden from view. When the switch cover 102 is in the second position (for example, configured to position the switch 121 in a second state associated with, for example, a vibrate mode of the mobile device 119), the visual indicator 128 can be uncovered such that the visual indicator 128 is exposed and visible. In some embodiments, two different visual indicators can be used. A first visible indicator can be visible when the switch cover 102 is in the first position and the second visible indicator can be covered, and the second visible indicator can be visible when the switch cover 102 is in the second position and the first visible indicator can be covered.

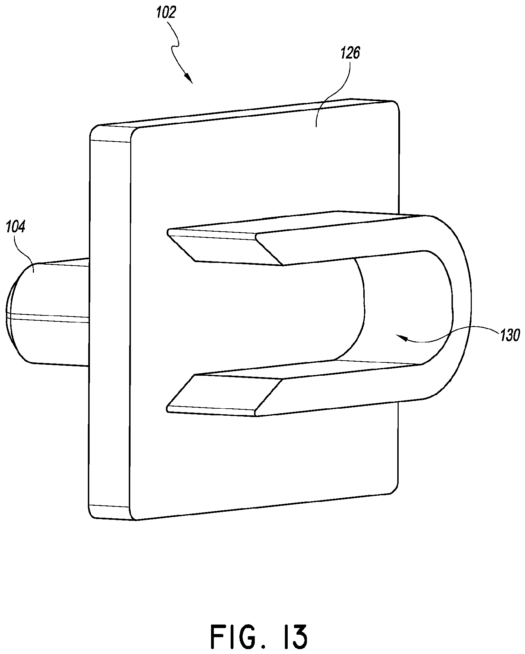

Figure 13 is an interior side, perspective view of the switch cover 102. The cover 102 can include an internal switch guide 130 to move the switch 121 of the mobile device 119 as discussed herein. The internal switch guide 130 can be attached, disposed, and/or formed to protrude from the base 126. The internal switch guide 130 can be positioned on an interior or inner surface of the base 126 as illustrated in Figure 13. The interior or inner surface of the base 126 can be a surface of the cover 102 that faces the interior of the shell 100 and/or is configured to face toward the mobile device 119 when the mobile device 119 is inserted into the shell 100. In some embodiments, the position of the internal switch guide 130 on the base 126 can correspond to the position of the handle 104 (e.g., the internal switch guide 130 can have a generally U-shaped configuration that would surround the handle 104 if positioned on the same side of the base 126 as the handle 104). For example, when the internal switch guide 130 engages the switch 121 of the mobile device 119 as discussed herein, the handle 104 can generally represent a same (horizontal) position as the position of the switch 121 on the mobile device 119.

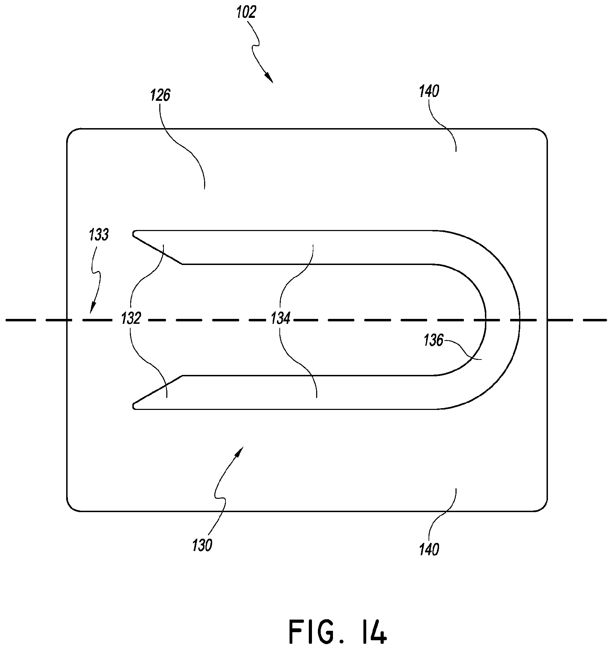

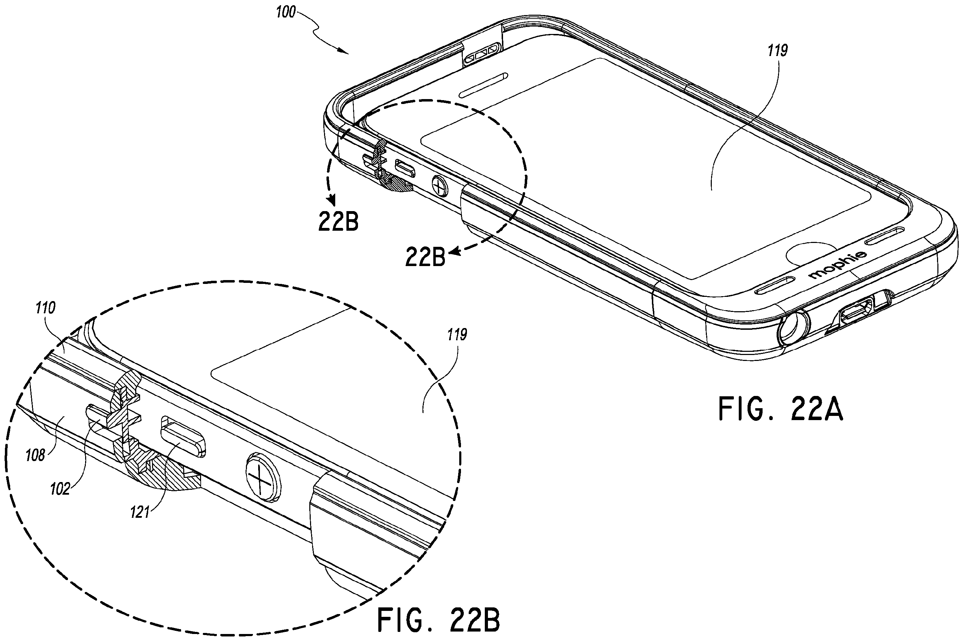

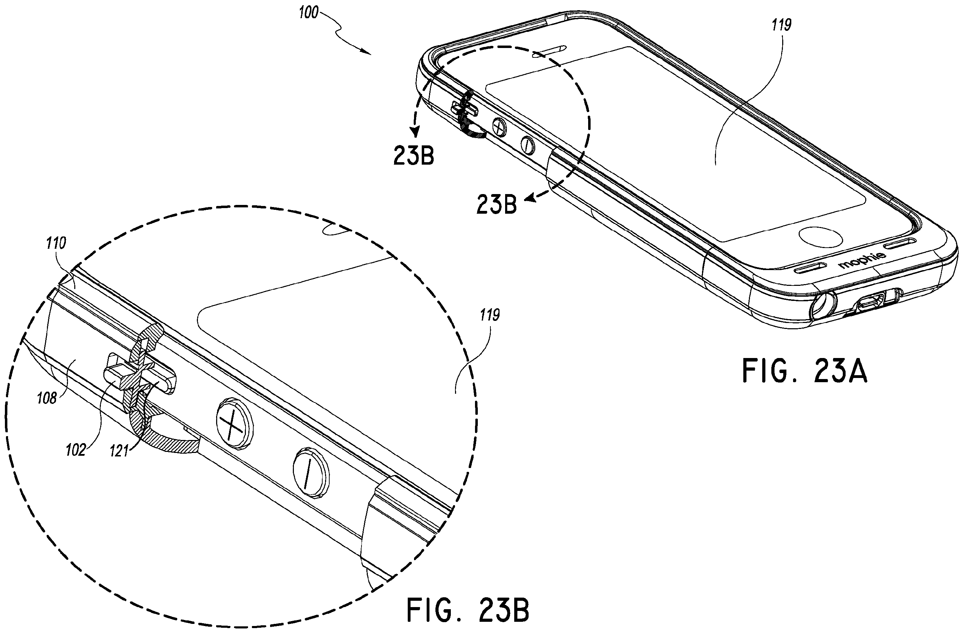

Figure 14 is an interior side view of the switch cover 102. The internal switch guide 130 can be disposed on the internal or inner surface of the base 126 as discussed herein. One end of the internal switch guide 130 can be open (e.g., the left side of the internal switch guide 130 as illustrated in Figure 14). The open end of the internal switch guide 130 can comprise divergent ends 132. The divergent ends 132 can include two or more (e.g., a first and a second) divergent ends 132 to engage the switch 121 of the mobile device 119 as discussed herein. The divergent ends 132 can diverge from each other (for example, diverging from a centerline 133 therebetween) toward ends or edges of the base 126, away from an interior or pathway of the internal switch guide 130 as discussed herein. The divergent ends 132 can facilitate or help position the cover 102 to correspond to the position of the switch 121 when the mobile device 119 is initially inserted into the shell 100. For example, if the switch 121 is in a position corresponding to the switch cover 102 being in an up position, but the switch cover 102 is in a down position, one of the divergent ends 132 can move or slide against the switch 121 as the mobile device 119 is inserted into the shell 100 (see Figures 22A-B and 23A-B), causing the switch cover 102 to move upward to match the up position of the switch 121. And vice versa, if the switch 121 is in a position corresponding to the switch cover 102 being in a down position, but the switch cover 102 is in an up position, the one of the divergent ends 132 can move or slide against the switch 121 as the mobile device 119 is inserted into the shell 100, causing the cover 102 to move downward to match the down position of the switch 121. Stated differently, as one of the divergent ends 132 contacts a surface of the switch 121 when the mobile device 119 is inserted into the shell 100, the angled surfaces of the divergent ends 132 slide against a surface of the switch and move the switch cover 102 at a rate corresponding to the angle of the divergent ends relative to a centerline 133 therebetween.

The divergent ends 132 can diverge or be spaced such that in any position of the switch cover 102, the divergent ends 132 are spaced or positioned beyond or at a periphery of the switch 121 in any position of switch 121. As such, when the mobile device 119 is inserted into the shell 100, one of the divergent ends 132 can engage the switch 121 of the mobile device 119 to move the switch cover 102 to correspond to the position of the switch 121 as discussed herein. If the position of the switch cover 102 corresponds to the position of the switch 121 upon insertion of the mobile device 119 into the shell 100, then the switch 121 may move past the divergent ends 132 without engaging the divergent ends 132. In some embodiments, the switch cover 102 can be configured to move between the first and second positions in response to a force that is lower than an amount of force that would cause the switch 121 to move between its first and second positions. Thus, when the mobile device 119 is coupled to the case 100 with the switch cover 102 misaligned from the switch 121, the switch cover 102 is moved to correspond to the position of the switch 121 instead of the switch 121 moving to correspond to the position of the switch cover 102.

The divergent ends 132 can be connected to guides such as guiderails (or guides or rails) 134 of the internal switch guide 130. The guiderails 134 can include two or more (a first and second) guiderails 134 to form a pathway therebetween and engage the switch 121 of the mobile device 119 within the pathway. When the mobile device 119 is inserted into the shell 100, the guiderails 134 can engage or contact the switch 121 of the mobile device 119 such that when the switch cover 102 is moved by a user as discussed herein, the guiderails 134 engage or contact the switch 121 to move the switch 121 as the switch cover 102 is moved by a user. In some embodiments, the guiderails 134 are spaced such that when the mobile device 119 is inserted into the shell 100, both of guiderails 134 illustrated in Figure 14 contact the switch 121 on opposite sides or surfaces of the switch 121. In some embodiments, the guiderails 134 are spaced such that when the mobile device 119 is inserted into the shell 100, one of guiderails 134 illustrated in Figure 14 contacts the switch 121 on one side or surface of the switch 121. For example, the one guiderail 134 that contacts one side of the switch 121 moves the switch 121 in a desired direction to a desired position (e.g., the guiderail 134 pushing against the switch 121 from a direction and contact side to move the switch 121 into the desired position), while the other guiderail 132 may be spaced apart or have some clearance between the other surface of the switch 121 opposite the surface of the switch 121 being pushed to move the switch 121.

As illustrated in Figure 14, the guiderails 134 may be straight. In some embodiments, the guiderails 134 may be curved (round, elliptical, etc.) to facilitate the cover 102 moving into the corresponding position of the switch 121 when the mobile device 119 is inserted into the shell 100. For example, rounded guide rails 134 may gradually move the cover 102 into the corresponding position of the switch 121 as the mobile device 119 is inserted into the shell 100. When the mobile device 119 is fully inserted into the shell 100, a main contact point or one or more contact points between the guiderails 134 and the switch 121 may be present (e.g., away from the divergent ends 132), near a center of the guiderails 134 or closer to a cap 136 of the internal switch guide 130.

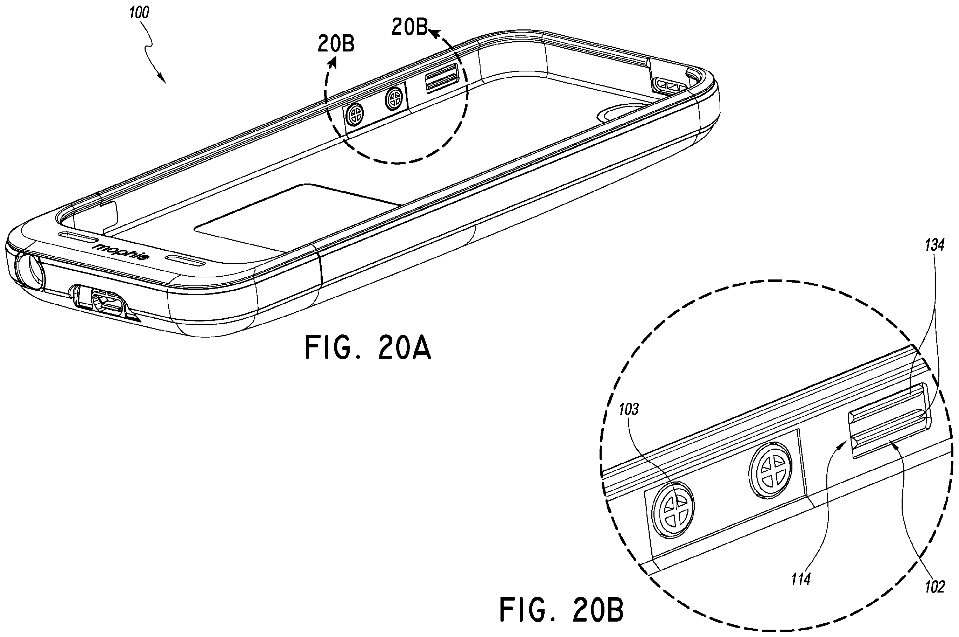

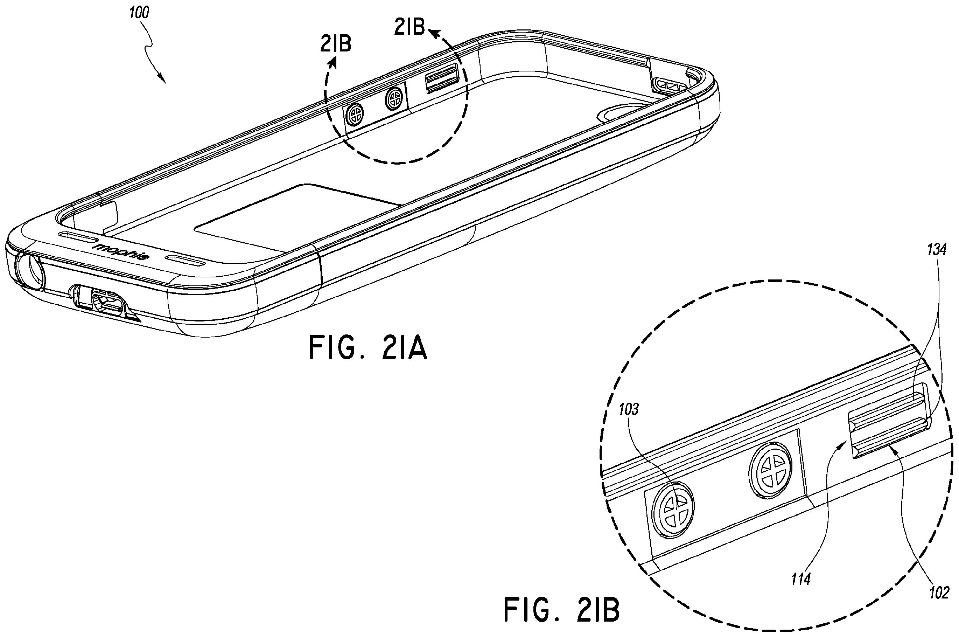

As illustrated in Figure 14, guiderails 134 may be parallel to each other. In some embodiments, the guiderails 134 may diverge similarly as the divergent ends 132, away from a center of the internal switch guide 134 or centerline 133 between the guiderails 134. In some embodiments, the internal switch guide 130 may not include divergent ends 132 as illustrated in, for example, Figures 20A-B and 21A-B. In some embodiments, the guiderails 134 may sufficiently diverge at the open end of the internal switch guide 130 to engage the switch 121 and move the cover 102 into a corresponding position of the switch 121 as discussed herein without having or necessitating for divergent ends 132. When the mobile device 119 is fully inserted into the shell 100, a main contact point or one or more contact points between the guiderails 134 and the switch 121 may be away from the open end of the internal switch guide 130, such as near a center of the guiderails 134 or closer to the cap 136 of the internal switch guide 130.

As illustrated in Figure 14, the internal switch guide 136 can include a cap or back support 136. The cap 136 can correspond in shape to a shape of an end of the switch 121. Figure 14 illustrates the cap 136 being rounded for an inner surface of the cap 136 contacting to switch 121 to correspond to rounded ends of the switch 121 as shown in, for example, Figures 6 and 22A-B and 23A-B. The divergent ends 132, guiderails 134, and/or cap 136 can form a generally u-shape of the internal switch guide 130 to correspond to the switch 121 as shown in, for example, Figures 6 and 22A-B and 23A-B. The cap 136 can press against or abut a wall or periphery of the mobile device 119 for the cover 102 to stay at a predetermined position or distance relative to the mobile device 119 or wall of the mobile device 119. For example, when the mobile device 119 is inserted into the shell 100, the internal or inner surfaces of the internal switch guide 130, including the divergent ends 132, guiderails 134, and/or cap 136 that face toward the mobile device 119, can abut or press against the wall of the mobile device 119, positioning the cover 102 at a constant distance relative to the wall of the mobile device 119. Maintaining the predetermined position or constant distance of the switch cover 102 relative to the mobile device 119 can help ensure proper engagement of the guiderails 134 with the switch 121 and adequate clearance to move the switch cover 102 in the opening 106 as discussed herein.

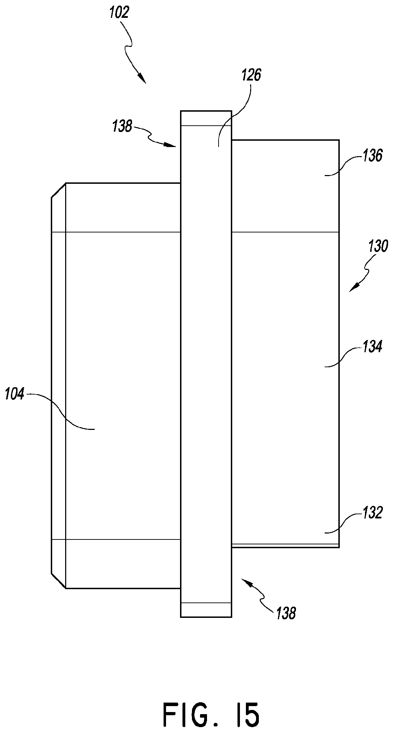

As illustrated in Figure 15, some of the internal or inner surfaces of the switch cover 102 facing or contacting the mobile device 119 when inserted into the shell 100 can terminate, end, or lie in a same plane. For example, the surfaces of diverging ends 132, the guiderails 134, and/or cap 136 facing the mobile device 119 can terminate, end, or lie in a same plane. By terminating in the same plane, the cover 102 can remain at a predetermined position relative to the mobile device or walls of the mobile device 119 to, for example, provide clearance for the switch 121 to move as the cover 102 is moved as discussed herein. Further, by terminating in the same plane and the cover 102 remaining at the predetermined position relative to the mobile device or walls of the mobile device 119, the predetermined position provides clearance for the parts or components of the cover 102 (for example, the diverging ends 132, the guiderails 134, and/or cap 136) to move relative to the mobile device 119 in the shell 100 and helps avoid having parts of the switch cover 102 get snagged or stopped against parts of the mobile device 119 (for example, a cavity on the mobile device housing the switch 121).

As illustrated in Figure 15, the handle 104 can be offset from a center point of the switch cover 102 and/or from a center point of the base 126 and/or from the internal switch guide 130. The internal switch guide 130 can be offset from the center point of the switch cover 102 and/or from the center point of the base 126 and/or from the handle 104. Such offset positioning of the handle 104 and/or the internal switch guide 130 can provide contact points 138 to resist or inhibit rotation or twisting of the cover 102 relative to the shell 100 when the mobile device 119 is being inserted into the shell 100. The contact points can contact or engage the cavity 144 formed by the recesses 116 and 120 of the exterior wall 108 and the inner wall 110 or other points of the shell 100 (for example, the exterior wall 108 and/or the internal wall 110) such that when the mobile device 119 is inserted into the shell 100, rotational movement (e.g., in the counterclockwise direction of the switch cover 102 relative to the illustrated view of Figure 15) is impeded by the contact points 138.

Returning to Figure 14, the base 126 can be generally rectangular or square. In some embodiments, the base 126 can be other suitable shapes to correspond to the shape of the cavity 144 formed by the recesses 116 and 120 of the outer wall 108 and inner wall 110. For example, the base 126 may be generally round, cylindrical, and/or a combination of shapes, such as rectangular and having rounded or circular sides or corners. The base 126 can be sized such that the internal switch guide 130 substantially spans a side to side length of the base 126 (left to right of the base 126 shown in Figure 14 along the centerline 133) or a length along the direction perpendicular to the direction of movement of the cover 102 between the first and second positions.

The base 126 can be sized such that the base 126 comprises guiding end portions 140 (e.g., on opposing sides of the guiderails 134). The guiding end portions 140 can be formed as part of or extend from the base 126 in a direction parallel to the direction of movement of the switch cover 102 between the first and second positions as discussed herein. Positioning the guiding end portions 140 parallel to the desired movement of the switch cover 102 can allow for the switch cover 102 to remain engaged with the shell 100 as the switch cover 102 is moved between the desired positions. For example, at least one of the guiding end portions 140 of the base 126 can remain engaged with an edge of the cavity 144 formed by the external wall 108 and the internal wall 110 in any position of the cover 102 relative to the shell 100.

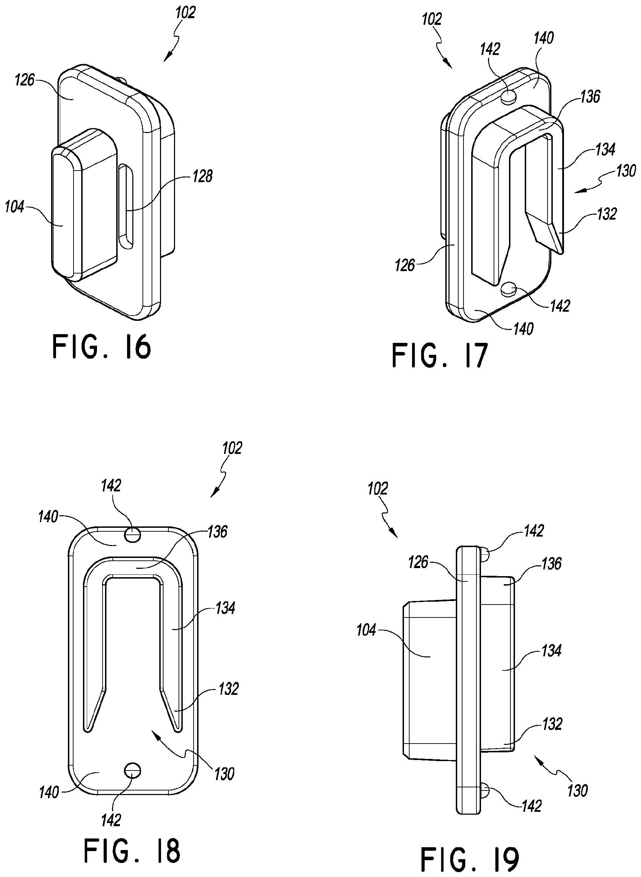

Figures 16-19 illustrate another example of a switch cover 102. Some or all of the features and functions of the switch cover 102 illustrated in Figures 12-15 can be applied to the switch cover 102 illustrated in Figures 16-19. Reference numbers for the features of the switch cover 102 illustrated in Figures 12-15 are kept the same where applicable for ease of understanding.

Figures 16-19 illustrate an embodiment of the switch cover 102 where the base 126 can be sized such that the base 126 comprises guiding end portions 140 corresponding to the open end of the base 126 with diverging ends 132 and the other end of the base 126 with the cap 136. The guiding end portions 140 can be formed or be disposed on the base 126 to extend in a direction perpendicular to the direction of movement of the switch cover 102 between the first and second positions as discussed herein. Positioning the guiding end portions 140 perpendicular to the desired movement of the cover 102 can allow for switch cover 102 to remain engaged with the shell 100 as the cover 102 is moved between the desired positions. For example, at least one of the guiding end portions 140 can remain engaged with the cavity 144 formed by the external wall 108 and the internal wall 110 in any position of the switch cover 102 relative to the shell 100.

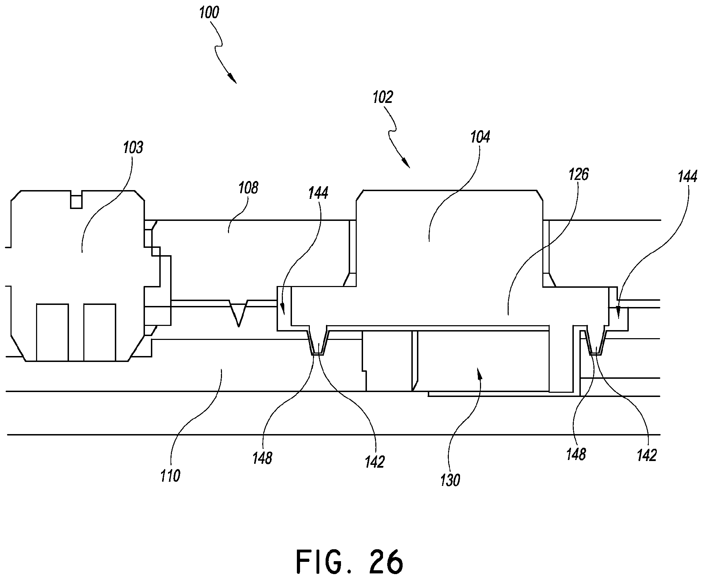

As illustrated in Figures 17-19, the cover 102 can have protruding portions 142 (e.g., on the guiding end portions 140 of the base 126). The protruding portions 142 can be attached, disposed, and/or formed to protrude from the base 126 (e.g., protruding inwardly towards the mobile device 119). The protruding portions 142 can engage or mate with one or more guiding tracks 148 (e.g., see Figure 26), which can be formed in the inner wall 108, for example. The protruding portions 142 can move (e.g., slide) along the guiding tracks 148. The guiding tracks 148 can be disposed in the inner wall 108 and/or outer wall 110 to provide a desired path of movement of the switch cover 102 between the first and second positions as discussed herein. The length of the guiding tracks 148 can be made a desired or predetermined length to restrict or inhibit a length of travel of the switch cover 102 beyond the first and second positions.

As illustrated in Figures 17-19, when the protruding portions 142 are disposed on an inner surface of the base 126 facing the mobile device 119, the guiding tracks 148 can be disposed in/on the inner wall 110. In some embodiments, when the protruding portions 142 are disposed on an outer surface of the base 126 facing away from the mobile device 119, the guiding tracks 148 can be disposed in/on the outer wall 108. In some embodiments, the protruding portions 142 can be disposed on both sides or surfaces of the base 126 (e.g., facing toward and away for the mobile device 119). The guiding tracks 148 can correspondingly be disposed on both the outer wall 108 and inner wall 110 to provide for movement of the cover 102 as discussed herein. In some embodiments, the protruding portions 142 can be disposed on the guiding end portions 140 as illustrated in Figures 12-15. The outer wall 108 and/or the inner wall 110 can have corresponding guiding tracks 148 to accommodate and guide the guiding end portions 140 that are illustrated in Figures 12-15.

Figures 20A-B and 21A-B illustrate a switch cover 102 in a shell 100. Some or all of the features and functions of the switch cover 102 illustrated in Figures 12-19 can be applied to the cover 102 illustrated in Figures 20A-B and 21A-B. Reference numbers for the features of the cover 102 illustrated in Figures 12-19 are kept the same where applicable for ease of understanding. Figures 20A-B illustrate the switch cover 102 in a first position as discussed herein. Figures 21A-B illustrate the switch cover 102 in a second position as discussed herein. Figures 20A-B and 21A-B illustrate an embodiment of the switch cover 102 without a cap 136 and/or without diverging ends 132. The cover 102 can have guiderails 134 that function to move the switch 121 of a mobile device 119 as discussed herein.

Figures 22A-B show a partial cutout view of a shell 100 with a mobile device 119 being inserted into the shell 100. Figure 22B illustrates a switch cover 102 in a first (e.g., up) position as discussed herein. Figure 22B further illustrates a switch 121 of the mobile device 119 being in a corresponding second (e.g., down) position as discussed herein. Figures 23A-B illustrate a partial cutout view of the shell 100 with the mobile device 119 inserted into the shell 100. As illustrated in Figures 23A-B, the switch cover 102 moves into the second (e.g., down) position (from the first position as illustrated in Figures 22A-B) to match the position of the switch 121 of the mobile device 119 when the mobile device 119 is inserted into the shell 100.

Figure 24 is a side, perspective cross-sectional view of a shell 100 with a mobile device 119. As illustrated in Figure 24, the switch cover 102 is housed in a cavity 144 formed by the assembly of the outer wall 108 and the inner wall 110. The cavity 144 can be formed by the outer wall recess 120 and/or the inner wall recess 116 formed in the outer wall 108 and inner wall 110, respectively, as discussed herein. The cavity 144 can accept, engage, and/or mate with the switch cover 102 and allow for movement of the switch cover 102 as discussed herein. The switch cover 102 can move (e.g., slide) in the cavity 144 between, for example, the first and second (e.g., up and down) positions as discussed herein. As illustrated in Figure 24, the cavity 144 accepts, engages, and/or mates with a lower guiding end portion 140 when the cover 102 is in the second position to position and guide the movement of the cover 102 as discussed herein.

The cavity 144 and/or base 126 can be sized and shaped for the cavity 144 to envelop, encase, contain, and/or surround an entire perimeter or periphery of the base 126 in any position of the switch cover 102 to maintain a desired orientation of the switch cover 102 relative to the shell 100 and engagement of the switch cover 102 with the shell 100 (for example, engagement with the cavity 144). As illustrated in Figure 24, the cavity 144 and/or base 126 can be sized and shaped for the cavity 144 to engage and/or mate with both or all of the guiding end portions 140 of the base 126 in the second position. The cavity 144 and/or base 126 can be sized and shaped for the cavity 144 to engage and/or mate with both or all of the guiding end portions 140 of the base 126 in the first position.

As illustrated in Figure 24, the switch cover 102 is in the second position (e.g., the down position) to correspond to the second position (e.g., the down position) of the switch 121 of the mobile device 119. In the configuration shown in Figure 24, the internal switch guide 130 engages the switch 121. In some cases, the divergent ends 132 have engaged the switch 121 upon insertion of the mobile device 119 into the shell 100 and may have moved the switch cover 102 to correspond to the position of the switch 121. The guiderails 134 connected to the divergent ends 132 engage and/or mate with the switch 121 at corresponding upper and lower or opposite ends/surfaces of the switch 121 such that the guiderails 134 can move the switch 121 in a desired direction when the cover 102 is moved by a user as discussed herein.

The switch 121 can have a switch visual indicator 146. The switch visual indicator 146 can indicate a mode of operation of the mobile device 119 as discussed herein. The switch visual indicator 146 can correspond to the visual indicator 128 of the cover 102. Accordingly, when the switch visual indicator 146 indicates that mobile device is in vibrate/silent mode, the visual indicator 128 on the switch cover 102 can indicate the same vibrate/silent mode when the mobile device 119 is inserted into the shell 100.

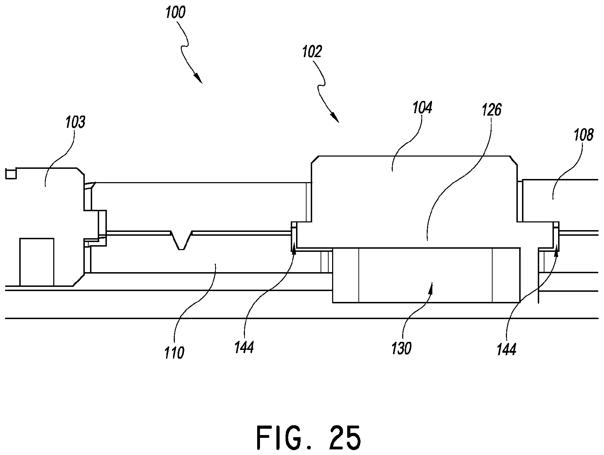

Figure 25 is a cross-sectional top view of a switch cover 102 in a shell 100. The cavity 144 can be sized to maintain positions and induce a desired movement of the switch cover 102, while still providing clearance (for example, gaps between the base 126 and recess edges 118, 122 as discussed herein) for the cover 102 to move between desired positions without friction or with minimal friction. The cavity 144 can accept and/or house, for example, the base 126 to control, guide, and restrict/inhibit movement of the cover 102 as discussed herein. The cavity 144 can be sized and shaped to restrict or inhibit movement of the cover 102 from side to side (e.g., perpendicular to the direction of desired movement between the first and second positions) as discussed herein. Side to side can be considered any undesired direction of movement for the cover 102 when, for example, the shell 100 and/or cavity 144 allows for linear (e.g., up and down) movement/translation of the cover 102 as discussed herein. The cavity 144 can also restrict rotational movement of the cover 102 as discussed herein, by for example, the cavity 144 and the base 126 having correspondingly rectangular shapes.

Figure 26 is a cross-sectional top view of a switch cover 102 in a shell 100. The cavity 144 can be sized and shaped to restrict to movement of the switch cover 102 from side to side as discussed herein, and in particular, in reference to Figure 25. As illustrated in Figure 26, the base 126 of the switch cover 102 can include protruding portions 142 as discussed herein. The inner wall 110 can have guiding tracks 148. The guiding tracks 148 can accept, engage, and/or mate with the protruding portions 142 to control, guide, and restrict/inhibit movement of the switch cover 102 as discussed herein.

The foregoing description has set forth various examples of the systems and/or methods via the use of figures and/or examples. Insofar as such figures and/or examples contain one or more functions and/or operations, it will be understood by those within the art that each function and/or operation within figures or examples can be implemented individually and/or collectively. The herein described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced embodiment recitation is intended, such an intent will be explicitly recited in the embodiment, and in the absence of such recitation no such intent is present. For example, as an aid to understanding, the disclosure may contain usage of the introductory phrases "at least one" and "one or more" to introduce embodiment recitations. However, the use of such phrases should not be construed to imply that the introduction of an embodiment recitation by the indefinite articles "a" or "an" limits any particular embodiment containing such introduced embodiment recitation to embodiments containing only one such recitation, even when the same embodiment includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce embodiment recitations. In addition, even if a specific number of an introduced embodiment recitation is explicitly recited, those skilled in the art will recognize that such recitation should typically be interpreted to mean at least the recited number (e.g., the bare recitation of "two recitations," without other modifiers, typically means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, embodiments, or drawings, should be understood to contemplate the possibilities of including one of the terms, either of the terms, or both terms. For example, the phrase "A or B" will be understood to include the possibilities of "A" or "B" or "A and B."

## Claims

1. A cover (102) for a switch (121), the cover (102) comprising:
a switch base (126) having a first surface facing toward the switch (121) and a second surface facing away from the switch (121);
an internal switch capture guide (130), on the first surface, with a first guide rail (134) that corresponds to a first side of the switch (121) and a second guide rail (134) corresponding to a second side of the switch (121) when the switch (121) is disposed in the cover (102); and
an external feature (104) on the second surface approximately corresponding to the position of the switch (121),
wherein:
the first and second guide rails (134) are slightly divergent such that when the internal switch capture guide (130) is slid over the switch (121), the cover (102) moves to match a position of the switch (121); or
the first and second guide rails (134) are substantially parallel, but ends (132) of the first and second guide rails (134) are angled in a way that when the internal switch capture guide (130) is slid over the switch (121), the cover (102) moves to match a position of the switch (121).

2. The cover (102) of Claim 1, wherein an imaginary line from the first guide rail (134) to the second guide rail (134) aligns with a direction that the switch (121) is configured to move.

3. The cover (102) of Claim 1 or Claim 2, wherein the internal switch capture guide (130) has at least one open side for accepting the switch (121).

4. The cover (102) of any one of Claims 1 to 3, wherein the internal switch capture guide (130) approximates a U-shape.

5. The cover (102) of any one of Claims 1 to4, wherein the switch base (126) is disposed in a cavity (144) in a shell (100) housing the cover (102).

6. The cover (102) of Claim5, wherein a portion of the switch base (126) is sandwiched between an internal wall (110) and an external wall (108) of the shell (100).

7. The cover (102) of Claim 5 or Claim 6 wherein, the switch base (126) can move relative to the shell (100) in a direction that the switch (121) is configured to move.

8. The cover (102) of Claim 7, wherein the switch (121) is configured to move between a first switch position and a second switch position;
the cover (102) is configured to move between a first position and a second position;
the cover (102) is configured to move the switch (121) to the first switch position when the cover (102) is moved to the first position;
the cover (102) is configured to move the switch (121) to the second switch position when the cover (102) is moved to the second position; and
the movement of the cover (102) between the first position and the second position is a linear translation.

9. The cover (102) of any of Claims 5 to 8, wherein the switch base (126) incorporates a directional guide feature (142), the directional guide feature (142) being a raised portion on the switch base (126) that corresponds to a path (148) in the shell (100).

10. The cover (102) of any one of Claims 1 to 9, wherein the internal switch capture guide (130) adjusts to fit over the switch (121) regardless of switch orientation.

11. A case (100) for a mobile device (119) incorporating the cover (102) of any of Claims 1 to 10, wherein the switch (121) is attached to the mobile device (119).

12. The case (100) of Claim 11, wherein the internal switch capture guide (130) adjusts to fit over the switch (121) regardless of switch orientation when the mobile device (119) is inserted into the case (100).

13. The case (100) of Claim 11 or Claim 12, further incorporating a battery (109), wherein the battery (109) can charge the mobile device (119).

14. The case (100) of any of Claims 11 to 13, further comprising an opening (106) shaped to engage the cover (102) while allowing the switch base (126) to move relative to the case (100).

15. The case (100) of any of Claims 11 to 14, wherein the cover (102) comprises a cover visual indicator (128) that, when the mobile device (119) is in the case (100), corresponds to a switch visual indicator (146) that indicates an operational mode of the mobile device (119).

## Patentansprüche

1. Abdeckung (102) für einen Schalter (121), wobei die Abdeckung (102) umfasst:
eine Schalterbasis (126), welche eine erste Fläche, welche in Richtung des Schalters (121) weist, und eine zweite Fläche aufweist, welche von dem Schalter (121) weg weist;
eine interne Schalter-Fangführung (130) an der ersten Fläche mit einer ersten Führungsschiene (134), welche einer ersten Seite des Schalters (121) entspricht, und einer zweiten Führungsschiene (134), welche einer zweiten Seite des Schalters (121) entspricht, wenn der Schalter (121) in der Abdeckung (102) angeordnet ist; und
ein externes Merkmal (104) an der zweiten Fläche, welches näherungsweise der Position des Schalters (121) entspricht,
wobei:
die ersten und zweiten Führungsschienen (134) leicht auseinanderlaufend sind, so dass, wenn die interne Schalter-Fangführung (130) über den Schalter (121) geschoben ist, sich die Abdeckung (102) bewegt, um zu einer Position des Schalters (121) zu passen; oder
die ersten und zweiten Führungsschienen (134) im Wesentlichen parallel sind, aber Enden (132) der ersten und zweiten Führungsschienen (134) in einer Weise gewinkelt sind, dass, wenn die interne Schalter-Fangführung (130) über den Schalter (121) geschoben ist, sich die Abdeckung (102) bewegt, um zu einer Position des Schalters (121) zu passen.

2. Abdeckung (102) nach Anspruch 1, wobei eine imaginäre Linie von der ersten Führungsschiene (134) zu der zweiten Führungsschiene (134) mit einer Richtung ausgerichtet ist, in welcher der Schalter (121) eingerichtet ist, sich zu bewegen.

3. Abdeckung (102) nach Anspruch 1 oder Anspruch 2, wobei die interne Schalter-Fangführung (130) wenigstens eine offene Seite zum Aufnehmen des Schalters (121) aufweist.

4. Abdeckung (102) nach einem der Ansprüche 1 bis 3, wobei sich die interne Schalter-Fangführung (130) einer U-Form annähert.

5. Abdeckung (102) nach einem der Ansprüche 1 bis 4, wobei die Schalterbasis (126) in einem Hohlraum (144) in einer Hülle (100) angeordnet ist, welche die Abdeckung (102) aufnimmt.

6. Abdeckung (102) nach Anspruch 5, wobei ein Abschnitt der Schalterbasis (126) zwischen einer internen Wand (110) und einer externen Wand (108) der Hülle (100) eingefasst ist.

7. Abdeckung (102) nach Anspruch 5 oder Anspruch 6, wobei sich die Schalterbasis (126) relativ zu der Hülle (100) in einer Richtung bewegen kann, in welcher der Schalter (121) eingerichtet ist, sich zu bewegen.

8. Abdeckung (102) nach Anspruch 7, wobei der Schalter (121) dazu eingerichtet ist, sich zwischen einer ersten Schalterposition und einer zweiten Schalterposition zu bewegen;
die Abdeckung (102) dazu eingerichtet ist, sich zwischen einer ersten Position und einer zweiten Position zu bewegen;
die Abdeckung (102) dazu eingerichtet ist, den Schalter (121) zu der ersten Schalterposition zu bewegen, wenn die Abdeckung (102) zu der ersten Position bewegt wird;
die Abdeckung (102) dazu eingerichtet ist, den Schalter (121) zu der zweiten Schalterposition zu bewegen, wenn die Abdeckung (102) zu der zweiten Position bewegt wird; und
die Bewegung der Abdeckung (102) zwischen der ersten Position und der zweiten Position eine lineare Verlagerung ist.

9. Abdeckung (102) nach einem der Ansprüche 5 bis 8, wobei die Schalterbasis (126) ein Richtung-Führungsmerkmal (142) umfasst, wobei das Richtung-Führungsmerkmal (142) ein erhabener Abschnitt an der Schalterbasis (126) ist, welcher einem Weg (148) in der Hülle (100) entspricht.

10. Abdeckung (102) nach einem der Ansprüche 1 bis 9, wobei sich die interne Schalter-Fangführung (130) anpasst, um über den Schalter (121) zu passen, ungeachtet einer Schalterorientierung.

11. Gehäuse (100) für eine mobile Vorrichtung (119), welche die Abdeckung (102) nach einem der Ansprüche 1 bis 10 umfasst, wobei der Schalter (121) an der Mobilvorrichtung (119) angebracht ist.

12. Gehäuse (100) nach Anspruch 11, wobei sich die interne Schalter-Fangführung (130) anpasst, um über den Schalter (121) zu passen, ungeachtet einer Schalterorientierung, wenn die mobile Vorrichtung (119) in das Gehäuse (100) eingesetzt ist.

13. Gehäuse (100) nach Anspruch 11 oder Anspruch 12, ferner umfassend eine Batterie (109), wobei die Batterie (109) die mobile Vorrichtung (119) laden kann.

14. Gehäuse (100) nach einem der Ansprüche 11 bis 13, ferner umfassend eine Öffnung (106), welche dazu geformt ist, mit der Abdeckung (102) einzugreifen, während der Schalterbasis (126) erlaubt wird, sich relativ zu dem Gehäuse (100) zu bewegen.

15. Gehäuse (100) nach einem der Ansprüche 11 bis 14, wobei die Abdeckung (102) einen sichtbaren Abdeckung-Indikator (128) umfasst, welcher, wenn die mobile Vorrichtung (119) in dem Gehäuse (100) ist, einem sichtbaren Schalter-Indikator (146) entspricht, welcher einen Betriebsmodus der mobilen Vorrichtung (119) anzeigt.

## Revendications

1. Couvercle (102) pour un interrupteur (121), le couvercle (102) comprenant :
une base d'interrupteur (126) ayant une première surface tournée vers l'interrupteur (121) et une deuxième surface tournée à l'opposé de l'interrupteur (121) ;
un guide de saisie d'interrupteur interne (130), sur la première surface, avec un premier rail de guidage (134) qui correspond à un premier côté de l'interrupteur (121) et un deuxième rail de guidage (134) correspondant à un deuxième côté de l'interrupteur (121) lorsque l'interrupteur (121) est disposé dans le couvercle (102) ; et
un élément externe (104) sur la deuxième surface correspondant approximativement à la position de l'interrupteur (121),
dans lequel :
les premier et deuxième rails de guidage (134) sont légèrement divergents de sorte que, lorsque le guide de saisie d'interrupteur interne (130) est amené à coulisser sur l'interrupteur (121), le couvercle (102) se déplace pour correspondre à une position de l'interrupteur (121) ; ou
les premier et deuxième rails de guidage (134) sont sensiblement parallèles, mais des extrémités (132) des premier et deuxième rails de guidage (134) sont inclinées de manière à ce que, lorsque le guide de saisie d'interrupteur interne (130) est amené à coulisser sur l'interrupteur (121), le couvercle (102) se déplace pour correspondre à une position de l'interrupteur (121).

2. Couvercle (102) de la revendication 1, dans lequel une ligne imaginaire allant du premier rail de guidage (134) au deuxième rail de guidage (134) s'aligne avec une direction suivant laquelle l'interrupteur (121) est configuré pour se déplacer.

3. Couvercle (102) de la revendication 1 ou la revendication 2, dans lequel le guide de saisie d'interrupteur interne (130) a au moins un côté ouvert pour recevoir l'interrupteur (121).

4. Couvercle (102) de l'une quelconque des revendications 1 à 3, dans lequel le guide de saisie d'interrupteur interne (130) se rapproche d'une forme en U.

5. Couvercle (102) de l'une quelconque des revendications 1 à 4, dans lequel la base d'interrupteur (126) est disposée dans une cavité (144) dans une coque (100) logeant le couvercle (102).

6. Couvercle (102) de la revendication 5, dans lequel une partie de la base d'interrupteur (126) est prise en sandwich entre une paroi interne (110) et une paroi externe (108) de la coque (100).

7. Couvercle (102) de la revendication 5 ou la revendication 6, dans lequel la base d'interrupteur (126) peut se déplacer par rapport à la coque (100) dans une direction suivant laquelle l'interrupteur (121) est configuré pour se déplacer.

8. Couvercle (102) de la revendication 7, dans lequel l'interrupteur (121) est configuré pour se déplacer entre une première position d'interrupteur et une deuxième position d'interrupteur ;
le couvercle (102) est configuré pour se déplacer entre une première position et une deuxième position ;
le couvercle (102) est configuré pour déplacer l'interrupteur (121) vers la première position d'interrupteur lorsque le couvercle (102) est déplacé vers la première position ;
le couvercle (102) est configuré pour déplacer l'interrupteur (121) vers la deuxième position d'interrupteur lorsque le couvercle (102) est déplacé vers la deuxième position ; et
le déplacement du couvercle (102) entre la première position et la deuxième position est une translation linéaire.

9. Couvercle (102) de l'une des revendications 5 à 8, dans lequel la base d'interrupteur (126) incorpore un élément de guidage directionnel (142), l'élément de guidage directionnel (142) étant une partie surélevée sur la base d'interrupteur (126) qui correspond à un chemin (148) dans la coque (100).

10. Couvercle (102) de l'une quelconque des revendications 1 à 9, dans lequel le guide de saisie d'interrupteur interne (130) s'ajuste pour s'adapter sur l'interrupteur (121) indépendamment de l'orientation d'interrupteur.

11. Boîtier (100) pour un dispositif mobile (119) incorporant le couvercle (102) de l'une des revendications 1 à 10, dans lequel l'interrupteur (121) est attaché au dispositif mobile (119).

12. Boîtier (100) de la revendication 11, dans lequel le guide de saisie d'interrupteur interne (130) s'ajuste pour s'adapter sur l'interrupteur (121) indépendamment de l'orientation d'interrupteur lorsque le dispositif mobile (119) est inséré dans le boîtier (100).

13. Boîtier (100) de la revendication 11 ou la revendication 12, incorporant en outre une batterie (109), dans lequel la batterie (109) peut charger le dispositif mobile (119).

14. Boîtier (100) de l'une des revendications 11 à 13, comprenant en outre une ouverture (106) conformée pour s'engager avec le couvercle (102) tout en permettant à la base d'interrupteur (126) de se déplacer par rapport au boîtier (100).

15. Boîtier (100) de l'une des revendications 11 à 14, dans lequel le couvercle (102) comprend un indicateur visuel de couvercle (128) qui, lorsque le dispositif mobile (119) se trouve dans le boîtier (100), correspond à un indicateur visuel d'interrupteur (146) qui indique un mode de fonctionnement du dispositif mobile (119).
